(19) Europäisches Patentamt
European Patent Office
Office européen des brevets

(11) EP 0 448 020 B1

(12) **FASCICULE DE BREVET EUROPEEN**

(45) Date de publication et mention de la délivrance du brevet:
**03.09.1997 Bulletin 1997/36**

(51) Int Cl.[6]: **H04Q 11/04**, H04J 3/16

(21) Numéro de dépôt: **91104173.9**

(22) Date de dépôt: **18.03.1991**

(54) **Unité de commutation élémentaire pour équipement de brassage de trains numériques multiplexes par multiplexage temporel d'affluents numériques à différents débits**

Elementäre Schaltungseinheit zur Verzweigung von digitalen Bitflüssen durch Zeitvervielfachung von Bitströmen mit verschiedener Bitrate

Elementary switching unit for cross-connecting digital bit flows by time-multiplexing bit streams of different bit rates

(84) Etats contractants désignés:
**AT BE CH DE ES FR GB IT LI NL SE**

(30) Priorité: **19.03.1990 FR 9003465**

(43) Date de publication de la demande:
**25.09.1991 Bulletin 1991/39**

(73) Titulaire: **ALCATEL CIT**
**75008 Paris (FR)**

(72) Inventeurs:
- **Guinand, Jacques**
  **F-78470 Saint Remy Les Chevreuse (FR)**
- **Ferrant, Jean-Loup**
  **F-92100 Boulogne-Billancourt (FR)**
- **Faye, Jean-Claude**
  **F-91190 Gif sur Yvette (FR)**
- **Roux, Hervé**
  **F-91300 Massy (FR)**

(74) Mandataire: **Weinmiller, Jürgen et al**
**Postfach 24**
**82336 Feldafing (DE)**

(56) Documents cités:
**DE-A- 2 141 184** **DE-A- 2 616 038**

- **JAPAN TELECOMMUNICATION REVIEW. vol. 30, no. 3, juillet 1988, TOKYO JP pages 42 - 50; M.Tokunaga: "Advanced Multimedia Time-Division Multiplexer"**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 448 020 B1

## Description

La présente invention concerne les systèmes de transmission numérique dans lesquels la transmission se fait sous la forme de trains numériques multiplexés obtenus par multiplexage temporel d'affluents numériques à différents débits suivant une hiérarchie de multiplexage synchrone.

La présente invention concerne plus particulièrement les équipements de brassage pour de tels systèmes de télécommunications, aptes à réaliser une distribution, suivant une loi déterminée, des affluents de trames entrantes portées par une pluralité de supports de transmission entrants, sur les trames sortantes portées par une pluralité de supports de transmission sortants.

Une hiérarchie de multiplexage synchrone d'affluents numériques à différents débits est définie dans les recommandations G707, G708, G709 du CCIT. Le principe de celle-ci est rappelé de façon schématique sur la figure 1. Les différents débits multiplexables par cette hiérarchie sont les débits 2 048 kbit/s - 8 448 kbit/s- 34 368 kbit/s - 1 544 kbit/s - 6 312 kbit/s - 44 736 kbit/s et 139 264 kbit/s normalisés par le CCITT et rappelés sur la partie droite de cette figure.

Cette hiérarchie de multiplexage présente plusieurs structures de multiplexage possibles suivant le débit des affluents à multiplexer pour une application considérée, et chaque structure de multiplexage, telle que celle repérée en traits renforcés sur cette figure, correspondant à des affluents à multiplexer de débits 1 544 kbit/s - 2 048 kbit/s - 8 448 kbit/s et 34 368 kbit/s, comporte plusieurs niveaux hiérarchiques, repérés N1, N2, N3 dans l'exemple considéré, en allant de la partie droite de la figure vers la partie gauche, dans le sens de formation des trames à partir des différents affluents.

Aux différents niveaux hiérarchiques d'une structure de multiplexage sont susceptibles d'être introduits des affluents et sont constituées des entités appelées ci-après conteneurs et des entités appelées ci-après unités de multiplexage.

On notera que par la suite, les termes conteneur et unité de multiplexage seront utilisés aussi bien pour désigner de façon générique des suites d'entités que pour désigner des éléments individuels de ces suites.

Les unités de multiplexage constituées à un niveau hiérarchique donné, et référencées TU ou AU (TU11, TU12, TU22, pour le niveau N1, TU31 pour le niveau N2 et AU4 pour le niveau N3 dans l'exemple considéré) sont formées par adjonction, aux conteneurs constitués au même niveau hiérarchique , de signaux d'indexation et de justification de ces conteneurs par rapport à ces unités de multiplexage.

Les conteneurs constitués à un niveau hiérarchique donné, et référencés VC (VC11, VC12, VC22, pour le niveau N1, VC31 pour le niveau N2, et VC4 pour le niveau N3 dans l'exemple considéré) sont formés par adjonction de signaux de service, suivant le cas soit à des signaux multiplex issus du multiplexage de "n" unités de mutliplexage constituées à un niveau hiérarchique inférieur, soit à des signaux, dits signaux d'information, prélevés sur un affluent introduit au niveau considéré, référencé C (C11, C12, C22 pour le niveau N1, et C31 pour le niveau N2, dans l'exemple considéré).

Le schéma de formation des différents conteneurs ou unités de multiplexage dans le cas de la structure de multiplexage considérée précédemment à titre d'exemple est indiqué sur la figure 2. Un conteneur VC4, constitué au niveau N3, est obtenu par multiplexage de signaux issus de quatre unités de multiplexage TU31a, TU31b, TU31c, TU31d, constituées au niveau N2.

Deux de ces unités de multiplexage, TU31a et TU31b, sont formées à partir de conteneurs VC31a et VC31b formés eux mêmes à partir d'affluents C31a et C31b à 34 358 kbit/s, introduits au niveau N2.

Les deux autres unités de multiplexage, TU31c et TU31d,sont formées à partir de conteneurs VC31c et VC31d formés eux-mêmes d'unités de multiplexage particulières, référencées TUG22, constituées au niveau N1, et opérant uniquement un multiplexage d'unités de multiplexage déjà constituées à ce même niveau hiérarchique, sans adjonction de signaux d'indexation et de justification.

Le conteneur VC31c est plus précisement formé à partir de quatre unités de multiplexage TUG22a, TUG22b, TUG22c, TUG22d, formées elles-mêmes à partir de quatre unités de multiplexage TU22a, TU22b, TU22c, TU22d, formées elles-mêmes à partir de quatre conteneurs VC22a, VC22b, VC22c, VC22d, formés à leur tour à partir de quatre affluents C22a, C22b, C22c, C22d à 8 448 kbit/s.

Le conteneur VC31d est formé par multiplexage de quatre unités de multiplexage TUG22e, TUG22f, TUG22g, TUG22 h, dont les deux premières, TUG22e et TUG22f, sont formées comme les unités de multiplexage TUG22a, TUG22b, TUG22c, TUG22d, à partir d'affluents C22e et C22f à 8 448 kbit/s.

La troisième unité de multiplexage TUG22g est formée à partir de cinq unités de multiplexage TU11a, TU11b, TU11c, TU11d, TU11e, formées respectivement à partir de conteneurs VC11a, VC11b, VC11c, VC11d, VC11e, formés à leur tour respectivement à partir de cinq affluents à 1 544 kbit/s : C11a, C11b, C11c, C11d, C11e.

La quatrième unité de multiplexage TUG22h est formée à partir de quatre unités de multiplexage TU12a, TU12b, TU12c, TU12d formées respectivement à partir de conteneurs VC12a, VC12b, VC12c, VC12d, formés à leur tour respectivement à partir d'affluents à 2 048 kbit/s: C12a, C12b, C12c, C12d.

L'unité de multiplexage constituée au niveau hiérarchique le plus élevé, c'est-à-dire l'unité de multiplexage AU4 dans l'exemple considéré, est obtenue par adjonction de signaux de justification et d'indexation au conteneur constitué à ce niveau, c'est-à-dire au conteneur VC4 dans l'exemple considéré.

Les trames résultantes STM sont obtenues par adjonction de signaux de service aux unités de multiplexage constituées au niveau hiérarchique le plus élevé.

La diversité de débits des affluents formant les trames résultant de ce multiplexage hiérarchique synchrone se traduit par le fait que les affluents ont à l'intérieur des trames ainsi obtenues, des périodes de répétition de leurs signaux d'information différentes, d'autant plus faibles pour un affluent donné que le débit de cet affluent est élevé. Cette période de répétition est obtenue en faisant le produit des facteurs "n" de multiplexage rencontrés tout au long de la structure de multiplexage pour l'affluent considéré. A titre d'exemple la période de répétition de l'affluent C12 à 2048 kbit/s est de 64, celle des affluents C11 à 1 544 kbit/s de 80, celle des affluents C22 à 8448 kbit/s de 16 et celle des affluents C31 à 34 368 kbit/s de 4.

Les signaux de justification adjoints à des conteneurs à un niveau hiérarchique donné pour constituer des unités de multiplexage permettent de réaliser une adaptation du rythme des signaux formant ces conteneurs au rythme d'une horloge locale utilisée à ce niveau hiérarchique, par la technique connue de justification positive-négative selon laquelle un signal d'un conteneur prend de temps à autre la place d'un signal de bourrage prévu à cet effet dans l'unité de multiplexage formée à partir de ce conteneur lorsque le premier de ces rythmes est supérieur au second, et un signal de bourrage prend de temps à autre la place d'un signal d'un conteneur lorsque le premier de ces rythmes est inférieur au second.

Les signaux d'indexation élaborés aux différents niveaux hiérarchiques permettent de répercuter sur des conteneurs de niveaux inférieurs les opérations de justification effectuées sur des conteneurs de niveaux supérieurs, pour tenir compte du multiplexage synchrone opéré aux différents niveaux de la hiérarchie de multiplexage. Ils permettent plus précisement de positionner chaque conteneur constitué à un niveau hiérarchique par rapport à l'unité de multiplexage correspondante constituée à ce niveau, en tenant compte des opérations de justification effectuées sur ce conteneur pour une trame donnée et pour des trames antérieures. Ils ont de plus une position déterminée à l'intérieur de l'unité de multiplexage correspondante, et par suite à l'intérieur du conteneur correspondant constitué au niveau hiérarchique immédiatement supérieur, ce qui permet par recours successif aux signaux d'indexation élaborés aux différents niveaux hiérarchiques rencontrés en parcourant la structure de multiplexage dans le sens inverse du sens de formation des trames à partir des affluents, de localiser le conteneur considéré à l'intérieur des trames.

Les signaux de service adjoints aux unités de multiplexage constituées au niveau hiérarchique le plus élevé afin de constituer les trames sont localisés à des emplacements répétitifs à l'intérieur de ces trames, d'où une représentation habituelle de ces trames sous forme de tableaux, ou matrices, ayant en pratique 9 lignes numérotées de 0 à 8, et 270 colonnes numérotées de 0 à 269, et se lisant de gauche à droite et de haut en bas, c'est-à-dire ligne par ligne, chaque intersection entre une ligne et une colonne correspondant à un signal (pouvant être un signal de service, un signal de justification, un signal d'indexation, ou un signal d'information) constitué en pratique par un octet.

Un équipement de brassage de trains numériques multiplexés comporte de manière connue un réseau de commutation qui à partir d'informations quant aux emplacements temporels occupés par les affluents sur les trames dans la hiérarchie de multiplexage considérée, de la loi de distribution mentionnée ci-dessus, et de trames entrantes, élabore des trames sortantes dont les affluents sont constitués par les affluents extraits des trames entrantes à leur rythme d'arrivée sur ces trames entrantes, et insérés sur les trames sortantes à des emplacements temporels indiqués par la loi de distribution.

Une architecture connue d'un tel réseau de commutation, correspondant à un réseau carré, est représentée sur la figure 3. Ce réseau de commutation est formé d'unités de commutation UCij agencées sous la forme d'une matrice à I lignes et J colonnes (avec 0≤ i ≤ I-1 et 0≤ j ≤J-1). A titre d'exemple on considère le cas I= J= 3, correspondant à une matrice de 3 lignes sur 3 colonnes, et le cas de 24 supports entrants, référencés Eo à E23, et sortants, référencés S0 à S23, de cet équipement.

Les unités de commutation ainsi agencées sont munies d'entrées dites verticales, d'entrées dites horizontales, et de sorties dites verticales, connectées de la façon suivante.

Les 24 supports entrants sont répartis entre les trois lignes de la matrice à raison de 8 supports entrants par ligne appliqués aux entrées horizontales des unités de commutation de cette ligne.

Les 24 supports sortants sont répartis entre les trois unités de commutation de la ligne 2 de la matrice, à raison de 8 supports sortants par unité de commutation, obtenus sur les sorties verticales de cette unité de commutation.

Aux entrées verticales des trois unités de commutation de la ligne 0 sont appliqués 24 supports dits de référence des trames sortantes, R0 à R23, répartis à raison de huit supports de référence appliqués aux entrées verticales de chaque unité de commutation de cette ligne.

Aux entrées verticales des unités de commutation de la ligne 1 sont par ailleurs appliquées respectivement les sorties verticales des unités de commutation de la ligne 0 et aux entrées verticales des unités de commutation de la ligne 2 les sorties verticales des unités de commutation de la ligne 1.

Les trames des différents supports sortant de cet équipement de brassage sont formées progressivement à la traversée des différentes colonnes de cette matrice en prenant en compte pour chaque emplacement élémentaire des différentes trames de référence, tel ou tel affluent de telle ou telle trame entrante, suivant la loi de distribution des trames entrantes sur les trames sortantes mentionnée plus haut.

Cette prise en compte se fait plus précisément de la façon représentée sur la figure 4 pour un sous-ensemble d'une unité de commutation, appelé unité élémentaire de commutation, comportant une seule entrée verticale E'l, une seule sortie verticale S'l et K entrées horizontales E0 à EK-1 (K étant égal à 8 dans l'exemple considéré).

L'entrée verticale considérée est appliquée à un premier multiplexeur MUX0 auquel est par ailleurs appliqué, par l'intermédiaire d'une première mémoire MEM0, l'entrée Eo.

La sortie du multiplexeur MUX0 est appliquée à un deuxième multiplexeur qui reçoit de même l'entrée E1, par l'intermédiaire d'une mémoire MEM1, et ainsi de suite.

La fonction même de commutation nécessite en effet une inscription préalable des mémoires MEM0, MEM1 - etc...par les signaux à commuter au moyen des multiplexeurs MUX0, MUX1..... etc.., ces différentes mémoires étant incrites séquentiellement par les signaux à brasser dans l'ordre de présentation de ces signaux sur les trames entrantes, et lues dans un ordre quelconque permettant de réaliser la loi de distribution recherchée au niveau de cette unité de commutation élémentaire. La commande de ces mémoires est repérée sur la figure 4 par des signaux de commande *C* issus d'un organe de commande central tel un microprocesseur.

Dans les équipements de brassage déjà existant, opérant sur des trains numériques multiplexés par multiplexage temporel synchrone d'affluents numériques plésiochrones, c'est-à-dire ayant un même débit nominal, il est par ailleurs d'usage de dimensionner ces mémoires de manière à ce que chacune d'elle puisse contenir la totalités des signaux à brasser contenus dans une trame entrante.

Dans le cas considéré de multiplexage temporel synchrone d'affluents numériques à différents débits, cette solution conduirait à des équipements de brassage beaucoup trop encombrants, compte tenu du nombre de signaux à mémoriser par trame, égal à 270 x 9, soit 2430 signaux, chaque signal étant par ailleurs constitué d'un octet, soit au total 19440 éléments binaires.

La demande de brevet allemand DE-A-2 616038 (LM ERICSSON) décrit une unité de commutation élémentaire qui comporte, pour chaque support de transmission de trames entrantes :

- des moyens d'extraction de signaux constitutifs d'unités de multiplexage à brasser desdites trames entrantes,
- une mémoire de signaux constitutifs d'unités de multiplexage à brasser, apte à contenir au moins N signaux, où N désigne la période de l'affluent de plus faible débit de la hiérarchie de multiplexage,
- des moyens pour assurer une écriture de cette mémoire, en synchronisme avec le rythme d'extraction, à des adresses distinctes pour des signaux constitutifs d'unités de multiplexage à brasser distinctes, et à des adresses identiques pour des signaux constitutifs d'une même unité de multiplexage à brasser, la fréquence de réécriture de chaque adresse étant liée à la période de répétition des signaux écrits à cette adresse,
- des moyens pour assurer une lecture de cette mémoire, en synchronisme avec le rythme réinsertion dans les trames sortantes de signaux constitutifs d'unités de multiplexage à brasser, à des adresses déterminées par ladite loi de distribution.

La présente invention a pour objet une unité de commutation élémentaire pour un équipement de brassage de trains numériques multiplexés par multiplexage temporel d'affluents numériques à différents débits, qui soit adaptée à de tels trains numériques.

La présente invention a pour objet une unité de commutation élémentaire pour équipement de brassage de trains numériques multiplexés par multiplexage temporel d'affluents numériques à différents débits suivant une hiérarchie de multiplexage synchrone aux différents niveaux de laquelle sont susceptibles d'être introduits des affluents et sont constituées des entités appelées unités de multiplexage formées suivant le cas soit de signaux multiplex issus du multiplexage d'unités de multiplexage de niveau hiérarchique inférieur, soit de signaux issus d'affluents; ladite unité de commutation élémentaire étant apte à assurer une distribution, suivant une loi déterminée, des signaux constitutifs d'unités de multiplexage, dites unités de multiplexage à brasser, de trames entrantes portées par une pluralité de supports de transmission entrant dans cette unité de commutation élémentaire, sur les trames sortantes portées par un support de transmission sortant de cette unité de commutation; comportant pour chaque support de transmission de trames entrantes :

- des moyens d'extraction de signaux constitutifs d'unités de multiplexage à brasser desdites trames entrantes,
- une mémoire, dite mémoire de signaux constitutifs d'unités de multiplexage à brasser, apte à contenir au moins N signaux, où N désigne la période de répétition dans les trames entrantes de l'affluent de plus faible débit de la hiérarchie de multiplexage,
- des moyens pour assurer une écriture de cette mémoire, en synchronisme avec le rythme d'extraction desdits signaux, à des adresses distinctes pour des signaux constitutifs d'unités de multiplexage à brasser distinctes, et à des adresses identiques pour des signaux constitutifs d'une même unité de multiplexage à brasser, la fréquence de réécriture de chaque adresse étant liée à la période de répétition, dans les trames entrantes, des signaux écrits à cette adresse,

- des moyens pour assurer une lecture de cette mémoire, en synchronisme avec le rythme d'insertion dans les trames sortantes de signaux constitutifs d'unités de multiplexage à brasser, à des adresses déterminées par ladite loi de distribution;

étant caractérisée en ce que les adresses de lecture de la mémoire de signaux constitutifs d'unités de multiplexage à brasser sont obtenues par lecture, en synchronisme avec ledit rythme d'insertion, d'une mémoire dite mémoire de connexion, contenant ladite loi de distribution sous la forme d'une correspondance entre ledit rythme d'insertion et les adresses des différentes mémoires de signaux constitutifs d'unités de multiplexage à brasser de cette unité de commutation élémentaire, à des adresses distinctes pour des signaux constitutifs d'unités de multiplexage à brasser distinctes et à des adresses identiques pour des signaux constitutifs d'une même unité de multiplexage à brasser, la fréquence de relecture des adresses de la mémoire de connexion étant liée à la période de répétition des signaux constitutifs des unités de multiplexage à brasser à insérer dans les trames sortantes aux instants correspondants et égale à la période des signaux à lire aux adresses correspondantes de la mémoire de signaux constitutifs d'unités de multiplexage à brasser.

D'autres objets et caractéristiques de la présente invention apparaîtront plus clairement à la lecture de la description suivante d'un exemple de réalisation faite en relation avec les dessins ci-annexés dans lesquels outre les figures 1 à 4 déjà décrites,

- la figure 5 est un schéma des moyens d'adressage en écriture d'une mémoire de signaux constitutifs d'unités de multiplexage à brasser,
- la figure 6 est un tableau illustrant le principe d'adressage en écriture d'une mémoire de signaux constitutifs d'unités de multiplexage à brasser,
- les figures 7, 8, 9 représentent un mode de réalisation d'un générateur d'adresses d'écriture d'une mémoire de signaux constitutifs d'unités de multiplexage à brasser,
- la figure 10 est un tableau illustrant le mode de commande du générateur d'adresses d'écrit;ure représenté sur les figures 7, 8, 9,
- la figure 11 est un schéma d'une unité de commutation élémentaire,
- les figures 12 à 33 illustrent un mode de réalisation des moyens d'extraction de signaux constitutifs d'unités de multiplexage à brasser.

On entend par unités de multiplexage à brasser les unités de multiplexage constituées à un niveau hiérarchique donné et auxquelles s'applique la loi de distribution des trames entrantes sur les trames sortantes.

Dans le cas de la hiérarchie de multiplexage dont le principe a été rappelé plus haut en relation avec la figure 1, les unités de multiplexage sont les entités obtenues à un niveau hiérarchique donné, par adjonction aux conteneurs constitués à ce niveau, de signaux d'indexation et de justification.

Dans l'exemple de réalisation d'une unité de commutation élémentaire suivant l'invention qui est décrit dans ce qui suit, on se placera dans le cas de la structure de multiplexage décrite sur la figure 2 et on considérera à titre d'exemple le cas où les unités de multiplexage à brasser sont les unités de multiplexage TU31a, TU31b, TU22a à TU22f, TUlla à TUlle et TU12a à TU12d.

Comme il a été fait remarquer plus haut, la période de répétition à l'intérieur des trames, des signaux constitutifs d'unités de multiplexage TU31 est de 4, celle d'unités de multiplexage TU22 est de 16, celle d'unités de multiplexage TUll de 80 et celle d'unités de multiplexage TU12 de 64.

Chaque mémoire d'une unité de commutation élémentaire, dite mémoire de signaux constitutifs d'unités de multiplexage à brasser, ou plus simplement mémoire de signaux à brasser, est dimensionnée de manière à respecter la période maximale que peuvent avoir ces signaux. Cette période maximale est de 84, obtenue, si l'on se réfère à la figure 1, dans le cas d'une structure de multiplexage comportant un multiplexage de 4 unités de multiplexage TUll obtenues à partir d'affluents C11 à 1544 kbit/s dans une unité de multiplexage particulière, référencée TUG21, puis un multiplexage de 21 unités de multiplexage TUG21 pour former un conteneur VC4.

Chacune des mémoires ainsi dimensionnée est écrite avec les signaux constitutifs d'unités de multiplexage à brasser extraits des trames entrantes appliquées à cette mémoire.

Sur la figure 5 sont référencés 1 une telle mémoire, SCB les signaux constitutifs d'unités de multiplexage à brasser qui sont à stocker dans cette mémoire, CK le rythme d'extraction de ces signaux, et 2 un générateur d'adresses d'écriture de la mémoire 1, dont le principe est maintenant exposé en relation avec le tableau de la figure 6.

Ce tableau indique, pour chaque unité de multiplexage à brasser c'est-à-dire dans l'exemple considéré : TU31a, TU31b, TU22a à TU22f, TU11a à TU11e ou TU12a à TU12d, dont le type TCB (c'est-à-dire TU31, TU22, TU11 ou TU12) et la périodicité T (en l'occurence 4, 16, 80 ou 64) sont rappelés, et qui est identifié plus simplement par un numéro, de 1 à 17, attribué comme indiqué sur la figure 2, l'adresse ADE d'écriture des signaux constitutifs de cette unité de multiplexage appliqués successivement en entrée de la mémoire de signaux à brasser, pour un ensemble de 80 signaux extraits consécutivement des trames entrantes et dont le rang d'extraction "r" (de 0 à 79) est également indiqué.

Le principe consiste à écrire les signaux appliqués en entrée de cette mémoire à des adresses identiques pour des signaux à brasser constitutifs d'une même unité de multiplexage, et à des adresses distinctes pour des signaux à brasser constitutifs d'unités de multiplexage distinctes.

Dans l'exemple de réalisation du générateur d'adresses d'écriture 2 décrit maintenant en relation avec la figure 7, ces adresses d'écriture sont attribuées dans l'ordre d'extraction des signaux constitutifs d'unités de multiplexage à brasser et sont donc obtenues en prenant le rang "r" du signal appliqué à un instant donné à l'entrée de la mémoire 1, modulo la période "T" de l'unité de multiplexage d'appartenance de ce signal.

Le générateur d'adresses d'écriture représenté sur la figure 7 comporte à cet effet un premier ensemble 4 de compteurs affectés à des périodes de signaux à brasser de valeurs 4, 16, 64 et 80, multiples d'une même période de base de valeur 4 correspondant à des trames dites "ETSI", et un deuxième ensemble 5 de compteurs affectés à des périodes de signaux à brasser de valeurs 3, 21, 63, 84, multiples d'une même période de base égale à 3 correspondant à des trames dites "US".

Le premier ensemble 4 de compteurs comporte comme représenté sur la figure 8, quatre compteurs 6, 7, 8, 9 dont les trois premiers 6, 7, 8 sont montés en cascade, le premier étant incrémenté par le signal d'horloge CK, et comptant respectivement "modulo 4" pour les trois premiers et "modulo 5" pour le dernier, ce dernier étant incrémenté par la sortie dite de débordement du compteur 7. Ces compteurs sont remis à zéro par un signal RAZ dont les impulsions se produisent à des instants déterminés, par rapport au début de chaque trame entrante, dont chacun desquels constitue un nouveau point de départ pour la numérotation des rangs r. On définira plus précisément plus loin les instants de remise à zéro de ces compteurs 6 à 9, c'est-à-dire les instants d'apparition des impulsions du signal RAZ dans le cas de trames entrantes "ETSI".

Le deuxième ensemble de compteurs comporte comme représenté sur la figure 9, quatre compteurs 10, 11, 12, 13, tous incrémentés par le signal d'horloge CK et remis à zéro par le signal RAZ, et comptant respectivement de 0 à 2, de 0 à 20, de 0 à 62 et de 0 à 83. On définira également plus précisément plus loin les instants de remise à zéro de ces compteurs, c'est-à-dire les instants d'apparition des impulsions du signal RAZ dans le cas de trames entrantes "US".

Le générateur d'adresses d'écriture 2 comporte également un circuit 14 de sélection de tels ou tels compteurs de tel ou tel ensemble de compteurs, suivant la période de l'unité de multiplexage considérée à l'entrée de la mémoire de signaux à brasser, cette période étant obtenue par lecture au rythme de l'horloge CK d'une mémoire 3 dite mémoire de description de trames entrantes, donnant la succession des unités de multiplexage à brasser sur les trames entrantes, ainsi que le type de ces unités de multiplexage. Le tableau représenté sur la figure 10 résume les compteurs à sélectionner CS suivant la période T en cause, dans l'exemple de structure de multiplexage entrante, qui est "ETSI", et d'unités de multiplexage à brasser considéré jusqu'ici en ce qui concerne la partie I de ce tableau, et dans le cas d'une structure de multiplexage entrante "US" et d'unités de multiplexage à brasser de types TU32, TU21, TU12 et TU11 en ce qui concerne la partie II de ce tableau.

La mémoire 3 est lue séquentiellement au rythme du signal d'horloge CK et contient, sous une forme codée, au moins une suite de périodes de longueur suffisante pour caractériser, par sa répétition, la totalité des signaux constitutifs d'unités de multiplexage à brasser d'une trame entrante.

Dans le cas de l'exemple considéré, cette suite est obtenue à partir d'une suite élémentaire de 4 périodes caractérisant le multiplexage effectué au niveau hiérarchique N3 le plus élevé (et suffisante pour décrire les trames entrantes si celles-ci étaient constituées uniquement d'affluents C31) en renouvelant cette suite élémentaire, en en changeant les deux derniers termes, autant de fois que nécessaire pour caractériser le multiplexage effectué au niveau hiérarchique inférieur N2. Il est ensuite inutile de renouveler la même opération au niveau hiérarchique inférieur N1, car on aboutirait à une simple répétition de la nouvelle suite ainsi obtenue, étant donné que les différents multiplexages effectués au niveau N1 s'effectuent respectivement sur des affluents de même débit.

Dans cet exemple, la suite ainsi obtenue est formée comme il apparaît à partir des figures 2 et 6, des périodes:

4-4-16-16-4-4-16-16-4-4-16-80-4-4-16-64.

Plus généralement, la mémoire 3 est à dimensionner pour pouvoir contenir au moins une suite de périodes en nombre égal à la valeur maximale, pour l'ensemble des structures de multiplexage possibles, du produit des facteurs de multiplexage intervenant dans ces structures, à l'exception de ceux intervenant à des niveaux hiérarchiques où ne peuvent être multiplexés que des affluents.

Dans le cas de la hiérarchie rappelée sur la figure 1, et comme il apparaît sur cette figure, cette valeur maximale est égale à 21.

Le nombre maximal de périodes différentes pour une même structure de multiplexage étant, si l'on se réfère à la figure 1, égal à 7, ce qui est le cas de la structure de multiplexage considérée à titre d'exemple, le nombre maximal d'éléments binaires nécessaires pour coder ces périodes en binaire est égal à 3.

On se réfère maintenant à la figure 11 qui décrit l'architecture d'une unité de commutation élémentaire, pour une trame entrante, ou horizontale, au sens donné sur la figure 4.

On retrouve sur la figure 11 la mémoire 1 de signaux à brasser et son circuit d'adressage en écriture, formé du générateur d'adresses d'écriture 2 commandé par la lecture de la mémoire 3 de description de trames entrantes.

Sur la figure 11 est par ailleurs représenté le circuit d'adressage en lecture de la mémoire 1 de signaux à brasser.

Les adresses de lecture de la mémoire 1 sont obtenues par lecture d'une mémoire 20, dite mémoire de connexion, commune aux différentes mémoires de signaux à brasser d'une même unité de commutation élémentaire. Cette mémoire de connexion contient la loi de distribution recherchée au niveau de l'unité de commutation élémentaire considérée et est elle-même lue, sous la commande d'un générateur d'adresses de lecture 21, au rythme de l'insertion, dans chaque trame entrante, dite verticale (au sens donné sur la figure 4), de différents signaux constitutifs d'unités de multiplexage à brasser issus de trames entrantes dites horizontales. Ce rythme d'insertion est en l'occurrence égal au rythme CK d'extraction des trames entrantes des signaux constitutifs de conteneurs à brasser.

La loi de distribution recherchée est plus précisément stockée dans la mémoire de connexion 20 sous la forme d'une correspondance entre les instants définis par le rythme d'insertion (représentant les adresses de la mémoire de connexion) et les adresses des mémoires de signaux à brasser à insérer à ces instants (représentant le contenu de la mémoire de connexion).

A chaque adresse de la mémoire de connexion 20 est ainsi stockée une adresse de lecture d'une mémoire de signaux constitutifs d'unités de multiplexage à brasser, ainsi qu'un code identifiant cette mémoire parmi l'ensemble des mémoires de l'unité élémentaire de commutation considérée.

Les adresses de lecture "adl" de la mémoire de connexion 20 sont par ailleurs élaborées de manière à respecter le principe d'écriture des signaux dans la mémoire de signaux à brasser 1, c'est-à-dire de manière à assurer une lecture de la mémoire 20, et donc de la mémoire 1, à des adresses identiques pour des signaux constitutifs d'une même unité de multiplexage à brasser, et à des adresses distinctes pour des signaux constitutifs d'unités de multiplexage à brasser distinctes.

Le générateur 21 d'adresses de lecture de la mémoire 20 est donc réalisé de façon analogue au générateur 2 d'adresses d'écriture de la mémoire 1 décrit précédemment, et fonctionne de façon analogue, en coopération avec une mémoire 22 de description de trames sortantes lue elle-même séquentiellement au rythme du signal d'horloge CK.

Les mémoires 20 et 21 sont par ailleurs dimensionnées respectivement comme les mémoires 1 et 3, sauf en ce qui concerne le contenu des mémoires 1 et 20 qui est de nature différente, ainsi qu'il vient d'être décrit.

Les mémoires 3, 20 et 22 contenant des données "extérieures", c'est-à-dire décrivant le mode de fonctionnement souhaité de l'équipement de brassage pour une application considérée, peuvent être écrites par des moyens de commande de l'équipement de brassage, par exemple par un microprocesseur. Ce mode d'écriture ne constitue pas l'objet de la présente invention.

On décrit maintenant un mode de réalisation possible des moyens d'extraction des signaux constitutifs d'unités de multiplexage à brasser. Ce mode de réalisation suppose des trames découpées en sections de même longueur (correspondant, dans le cas de la hiérarchie de multiplexage dont le principe a été rappelé plus haut, aux lignes) dans lesquelles les unités de multiplexage à brasser ne sont susceptibles d'occuper que des emplacements élémentaires prédéterminés, de position définie par rapport au début de ces sections, et invariable, pour une même unité de multiplexage, d'une section de trame à une autre et d'une trame à une autre.

Le rythme d'extraction des signaux constitutifs d'unités de multiplexage à brasser est alors obtenu simplement à partir du signal de synchronisation d'emplacements élémentaires des trames, en bloquant celui-ci en dehors desdits emplacements élémentaires prédéterminés.

Dans le cas de la hérarchie de multiplexage dont le principe a été rappelé plus haut en relation avec la figure 1, l'obtention de trames ainsi organisées peut être obtenue en utilisant une interface de restructuration de trames dont un exemple de réalisation va maintenant être décrit.

Avant de décrire cet exemple de réalisation, il est utile de rappeler la forme et la constitution des trames non restructurées.

La figure 12 représente une telle trame non restructurée dans le cas où le niveau hiérarchique le plus élevé est le niveau N3.

La zone hachurée sur la figure 12 contient les signaux de service, référencés SOH, adjoints à une unité de multiplexage AU4 pour constituer une trame, et la zone non hachurée contient une telle unité de multiplexage AU4.

Une unité de multiplexage AU4 est constituée d'un conteneur VC4 auquel sont adjoints des signaux d'indexation, référencés H1VC4 et H2VC4, qui sont toujours présents et des signaux de justification dont les uns, référencés H30VC4, H31VC4 et H32VC4 sont toujours présents sauf en cas de justification négative et dont d'autres, non référencés, ne sont présents qu'en cas de justification positive. Les signaux d'indexation H1VC4 et H2VC4 et, lorsqu'ils ne sont pas absents les signaux de justification H30VC4, H31VC4 et H32VC4 occupent respectivement les colonnes 0, 3, 6, 7, et 8 de la ligne 3; les signaux de justification positive occupent quant à eux, lorsqu'ils sont présents, les colonnes 9, 10, 11 de la ligne 3.

Les signaux d'indexation H1VC4 et H2VC4 permettent de localiser un conteneur VC4 à l'intérieur d'une unité de multiplexage AU4, et donc à l'intérieur d'une trame, en pratique par la localisation du premier octet de ce conteneur VC4, repéré $\Delta$ sur la figure 12.

Le positionnement d'un conteneur VC4 à l'intérieur d'une trame "m" donnée et de la trame "m+1" suivante, sur laquelle il déborde par l'effet même des signaux d'indexation ainsi que par la localisation de ces signaux d'indexation en ligne 3 des trames (comme montré sur la figure 12) est illustré sur la figure 13, l'espace occupé par le conteneur VC4 étant repéré par des hachures.

Le contenu d'un conteneur VC4 est représenté sur la figure 14, sous la forme d'un tableau de 9 lignes et de 261 colonnes se lisant également de gauche à droite et de haut en bas, et s'insérant parfaitement, en l'absence de justifications du conteneur VC4 par rapport à l'unité de multiplexage AU4, dans le cadre représenté en pointillés sur la figure 13, formé des octets situés en colonnes 9 à 269 des lignes 3 à 8 de la trame "m" et 0 à 2 de la trame "m+1".

En pratique, la forme du conteneur VC4 s'éloigne de cette forme nominale, du fait des justifications, positives ou négatives, opérées sur ce conteneur pour des trames antérieures et jusqu'à la trame "m" en cours, qui se traduisent par un décalage du premier octet du conteneur VC4 (indiqué par les octets H1VC4 et H2VC4 de la trame "m") et du fait d'une éventuelle justification opérée sur ce conteneur pour la trame "m+1". Dans la figure 13, on a illustré le cas où une justification positive est opérée sur ce conteneur pour la trame "m+1", cette justification, indiquée par les octets H1VC4 et H2VC4 de la trame "m+1", se traduisant par une insertion d'octets de bourrage en colonnes 9 à 11 de la ligne 3 de la trame"m+1".

Dans le cas d'une justification négative opérée pour la trame "m+1", toujours indiquée par les octets H1VC4 et H2VC4 de la trame "m+1", le conteneur VC4 n'aurait pas, comme représenté à la figure 13, une partie en retrait de trois octets à la ligne 3 de la trame "m+1" mais présenterait sur cette même ligne une avancée de trois octets au niveau des colonnes 6 à 8, cette justification négative s'effectuant en mettant des octets du VC4 à l'emplacement des octets H30VC4, H31VC4 et H32VC4 d'opportunité de justification négative de la trame "m+1".

Le conteneur VC4 considéré est formé par multiplexage de quatre unités de multiplexage TU31a, TU31b, TU31c, TU31d occupant la zone non hachurée sur la figure 14, et par adjonction de signaux de service, référencés POHVC4, occupant la zone hachurée c'est-à-dire la première colonne, ou colonne de gauche, du tableau à 9 lignes et 261 colonnes. Chaque unité de multiplexage, TU31a par exemple, est elle-même formée par adjonction à un conteneur, VC31a dans cet exemple, de signaux d'indexation, référencés H1VC31a et H2VC31a et de signaux de justification dont l'un, référencé H3VC31a et prévu pour donner une opportunité de justification négative, est toujours présent sauf en cas de justification négative et dont un autre, non représenté, n'est présent qu'en cas de justification positive. Les signaux d'indexation et de justification des quatre conteneurs VC31 sont de position déterminée par rapport au premier octet du conteneur VC4 ce qui permet, une fois celui-ci localisé, de les localiser, et donc de localiser ces conteneurs, en pratique par la localisation de l'emplacement de leur premier octet, référencé respectivement Δa, Δb, Δc, Δd.

Les différents conteneurs VC31 ( VC31a, VC31b, VC31c, VC31d) sont de même représentés sur la figure 15, chacun d'eux étant formé par adjonction de signaux de service,
référencés respectivement POHVC31a, POHVC31b, POHVC31c, POHVC31d soit à des unités de multiplexage TUG22 multiplexées, soit à des signaux issus d'un affluent C31, suivant le cas. Chacun des conteneurs VC31 peut être représenté, ainsi qu'illustré à la figure 15, sous forme d'un tableau se lisant de gauche à droite et de haut en bas, formé de 9 lignes et 65 colonnes (c'est-à-dire 260/4) dont la première, qui contient les signaux de service, est incomplète, le nombre de signaux nécessaires pour la compléter étant égal au nombre de signaux d'indexation et de justification adjoints à chaque conteneur VC31 en l'absence de justification positive et de justification négative pour constituer l'unité de multiplexage TU31 correspondante.

Il serait possible de représenter de façon similaire les conteneurs de niveaux hiérarchiques inférieurs, c'est-à-dire sous forme d'un tableau ayant 9 lignes et un nombre de colonnes dépendant du niveau hiérarchique considéré et décroissant avec ce niveau hiérarchique, certaines colonnes étant incomplètes.

Il apparaît ainsi que par le jeu des opérations d'indexation et de justification effectuées successivement aux différents niveaux hiérarchiques, la position à l'intérieur des trames des signaux constitutifs de conteneurs constitués à un niveau hiérarchique donné est déterminable, à partir des signaux d'indexation et de justification des conteneurs considérés et des conteneurs de niveaux hiérarchiques supérieurs.

Pour simplifier, dans la description qui suit d'un mode de réalisation d'une interface de restructuration de ces trames, on supposera que les unités de multiplexage à brasser sont les unités de multiplexage TU31a, TU31b, TU31c, TU31d.

La restructuration de ces trames nécessite une extraction de ces trames des signaux, ou octets, constitutifs des conteneurs VC31a, VC31b, VC31c, VC31d, qui nécessite elle-même une localisation préalable du premier octet de ces conteneurs dans ces trames. Cette localisation se décompose en une localisation des signaux d'indexation des conteneurs de niveau supérieur, VC4, qui autorise une localisation du premier octet de ces conteneurs VC4, et, les signaux d'indexation des conteneurs VC31 étant de position déterminée à l'intérieur des conteneurs VC4 ainsi localisés, une localisation de ces derniers signaux d'indexation, qui autorise à son tour une localisation du premier octet de chaque conteneur VC31.

Les circuits effectuant ces différentes localisations ont en commun un certain nombre d'éléments qui sont représentés sur la figure 16, parmi lesquels un compteur 1', dit compteur de lignes, qui compte de 0 à 8, qui est incrémenté par un signal SL de synchronisation de ligne des trames incidentes et qui est remis à zéro par un signal ST de synchronisation de trame des trames incidentes, et un compteur 2', dit compteur de colonnes, qui compte de 0 à 269, qui est incrémenté par un signal SC de synchronisation de colonne des trames incidentes et qui est remis à zéro par le signal SL de synchronisation de ligne des trames incidentes.

Les compteurs 1' et 2' délivrent sur plusieurs fils en parallèle, (ce qui a été représenté par des traits gras) des signaux référencés respectivement CMPL et CMPC indiquant les états de comptage respectifs de ces compteurs.

Les signaux ST, SL et SC sont issus d'une base de temps 3' qui reçoit en entrée les trames incidentes sous forme série, référencés "stm".

Les trames incidentes sous forme parallèle, STM, c'est-à-dire sous forme de mots successifs de huit éléments binaires, ou octets, sont obtenues en sortie d'un convertisseur série- parallèle 4' commandé par le signal SC de synchronisation de colonnne, c'est-à-dire de synchronisation d'octet, et recevant en entrée les trames incidentes sous forme série.

Sur la figure 16 sont également représentés des circuits 50, 51, 52, 53, 54, 55, 56, 57, 58 de détection de lignes 0, 1, 2, 3, 4, 5, 6, 7, 8 des trames incidentes délivrant respectivement des signaux DL0, DL1, DL2, DL3, DL4, DL5, DL6, DL7, DL8, et des circuits 60, 61, 62, 63, 64 de détection de colonnes 0, 3, 5, 9, 11 des trames incidentes, délivrant respectivement des signaux DC0, DC3, DC5, DC9, DC11.

Ces circuits sont constitués de simples décodeurs d'états des compteurs 1' et 2'; les signaux qu'ils délivrent sont des signaux logiques présentant en l'occurence un niveau "1" lorsque les lignes ou colonnes concernées sont en cours sur les trames incidentes, et un niveau "0" autrement.

On décrit maintenant comment s'effectue la détection des signaux d'indexation H1VC4 et H2VC4 du conteneur VC4, en relation avec la figure 17 représentant le circuit mis en oeuvre et avec la figure 18 représentant un chronogramme de fonctionnement de ce circuit.

Les signaux d'indexation H1VC4 et H2VC4 étant situés respectivement en colonnes 0 et 3 de la ligne 3 des trames incidentes, ce circuit comporte un circuit 8' de détection de coïncidence entre l'état "3" du compteur de lignes et l'état "0" du compteur de colonnes et un circuit 9' de détection de coïncidence entre l'état "3" du compteur de lignes et l'état "3" du compteur de colonnes, les circuits 8' et 9' consistant en l'occurrence en des portes effectuant un "ET" logique, respectivement entre les signaux DL3 et DC0 d'une part, DL3 et DC3 d'autre part.

Les signaux logiques obtenus en sortie des portes "ET" 8' et 9' sont appliqués respectivement aux entrées d'horloge, sensibles ici à des fronts montants, de deux registres 10' et 11' qui reçoivent par ailleurs sur leurs entrées de données les trames incidentes STM, et dans lesquels sont stockés respectivement les octets H1VC4, et H2VC4, à leur apparition sur les trames incidentes.

Dans la figure 18, on a représenté un chronogramme des signaux ST, SL, CMPL, DL3, SC, CMPC, DC0 et DC3. Pour une plus grande lisibilité de cette figure, l'échelle des temps a été dilatée pour l'état 3 du signal de sortie CMPL du compteur 1'.

On décrit maintenant comment s'effectue la détection des signaux d'indexation des conteneurs VC31a, VC31b, VC31c et VC31d. Cette détection s'effectuant de façon analogue pour les quatre conteneurs VC31, on la décrit seulement pour l'un des conteneurs, VC31a par exemple, en relation avec les figures 19, 20, et 23 représentant le circuit effectuant cette détection, ainsi qu'avec les figures 13 et 14 décrites précédemment et représentant respectivement l'emplacement d'un conteneur VC4 dans les trames incidentes et la constitution d'un conteneur VC4, et avec les figures 21 représentant un chronogramme de fonctionnement, 22 montrant la constitution des octets d'indexation H1VC4, H2VC4, et 24 illustrant le principe de détection du premier octet d'un conteneur VC4.

Les octets d'indexation H1VC4 et H2VC4 permettent de repérer la position du premier octet du conteneur VC4 à l'intérieur du rectangle représenté en pointillés sur la figure 13. Ils permettent plus précisément de repérer un emplacement parmi 783 emplacements possibles, repérés par des hachures sur la figure 24 et distants de trois octets, les conteneurs VC4 étant en effet justifiés par trois octets, que ce soit en justification négative ou positive. On désigne par $\Delta$ VC4 la valeur, comprise entre 0 et 782, donnée par ces signaux d'indexation.

Le premier octet d'un conteneur VC4 est constitué par le premier des octets de service POHVC4, référencé J1 comme montré sur la figure 14. Cet octet J1 est immédiatement suivi de l'octet H1VC31a, premier octet d'indexation du conteneur VC31. Le deuxième octet d'indexation du conteneur VC31a, H2VC31a, est situé dans le conteneur VC4 à un emplacement distant d'un nombre d'octets fixe après H1VC31a, en l'occurence 261 octets (soit la largeur du rectangle représenté en pointillés sur la figure 13).

Le circuit de détection d'octet H1VC31a comporte, comme représenté sur la figure 19, un compteur 20' remis à zéro, à travers un détecteur de transitions montantes 20", par un signal référencé RST1, en ligne 3, colonne 9, des trames incidentes, soit immédiatement après l'emplacement réservé au signal de justification H32VC4, et incrémenté par un signal d'horloge CLK1 obtenu à partir du signal de synchronisation de colonne des trames incidentes en bloquant les transitions de celui-ci durant les neuf premiers emplacements élémentaires, ou temps-octet, de chaque ligne, et, à l'intérieur des transitions ainsi isolées, en n'en prenant en compte qu'une sur trois. Les différentes valeurs susceptibles d'être prises par ce compteur sont les valeurs 0 à 782 indiquées sur la figure 24.

Le signal de sortie CMP1 du compteur 20' est appliqué à un comparateur 21' qui reçoit par ailleurs la valeur $\Delta$ VC4+1 issue d'un additionneur 22' ajoutant la valeur "1" à la valeur $\Delta$ VC4. Lorsque la valeur du compteur 20' atteint la valeur Δ VC4+1, cela signifie que l'emplacement de l'octet H1VC31a se présente alors dans la trame. Cet octet est stocké dans un registre 23 dont l'entrée d'horloge, sensible ici à des fronts montants, reçoit le signal CP1 de sortie du comparateur 21' présentant à l'instant considéré un front montant, et dont l'entrée de données reçoit les trames incidentes STM.

A cet instant le signal CP1 commande le comptage d'un compteur 24 comptant de 0 à 260 et s'autobloquant à 260. Ce compteur 24 est incrémenté par un signal d'horloge CLK2 obtenu à partir du signal SC de synchronisation de colonne des trames incidentes en bloquant ce dernier en colonnes 0 à 8 pour les lignes 0, 1, 2, 4, 5, 6, 7, 8, en colonnes 0 à 5 pour la ligne 3 si le conteneur VC4 est justifié négativement par rapport à l'unité de multiplexage AU4, en colonnes 0 à 11 pour la ligne 3 si le conteneur VC4 est justifié positivement par rapport à l'unité de multiplexage AU4, en colonnes 0 à 8 pour la ligne 3 si le conteneur VC4 n'est pas justifié par rapport à l'unité de multiplexage AU4.

En effet, comme le montre la figure 13, l'octet H1VC31a d'une trame "m" donnée pouvant être localisé à priori en toute ligne 3 à 8 de cette trame ou en toute ligne 0 à 2 de la trame "m+1" suivante, l'octet H2VC31a peut lui-même se trouver en toute ligne 4 à 8 de la trame "m" ou en toute ligne 0 à 3 de la trame "m+1". La justification du conteneur VC4 à la trame "m+1" est donc à prendre en compte dans le cas où la ligne 3 de la trame "m+1" est rencontrée au cours du comptage effectué par le compteur 24.

La détection de l'état 260 du compteur 24, dont l'état est indiqué par son signal de sortie CMP2, est effectuée par un circuit de détection 25 fournissant un signal de sortie CP2 qui présente à cet instant une transition montante et qui est appliqué à l'entrée d'horloge, sensible ici à des fronts montants, d'un registre 26 qui reçoit sur une entrée de données parallèle les trames STM, pour commander lors de l'arrivée à 260 du compteur 24, le stockage, dans ce registre 26, de l'octet des trames incidentes STM occupant l'emplacement correspondant, cet octet étant l'octet H2VC31a.

On notera que, pour la détection des signaux d'indexation des conteneurs VC31b, VC31c et VC31d, ce sont respectivement les valeurs Δ VC4 +2, Δ VC4+3 et Δ VC4+4 qui sont comparées à l'état ou valeur de comptage du compteur 20', indiqué par son signal de sortie CMP1.

On décrit maintenant, en relation avec la figure 20, les circuits de génération des signaux CLK1, RST1 et CLK2.

Le circuit de génération du signal d'horloge CLK1 comporte un circuit 12' de prise en compte, en colonnes 9 à 269 seulement, des transitions du signal SC de synchronisation de colonne, qui reçoit d'une part ce signal SC, et d'autre part le signal Q1 de sortie d'un circuit 13' de génération de fenêtre temporelle s'étendant de la colonne 9 à la colonne 269 de chaque ligne. Ladite fenêtre temporelle étant représentée par un signal logique Q1 de niveau "1", le circuit 12' consiste en une porte "ET". Le circuit 13' consiste en une bascule de type "D" 14' qui fournit sur sa sortie Q le signal Q1 et qui reçoit sur son entrée D le signal issu de sa sortie complémentée Q, sur son entrée de remise à zéro CL le signal SL de synchronisation de ligne et sur son entrée d'horloge le signal S1 de sortie d'une porte "OU" 15' recevant elle-même d'une part le signal SL de synchronisation de ligne et d'autre part le signal DC9 de détection de colonne 9 des trames incidentes. Le signal S2 obtenu en sortie du circuit 12' est appliqué à l'entrée d'horloge, sensible ici à des fronts montants, d'un compteur 16' "modulo 3" qui est remis à zéro, à travers un détecteur de transitions montantes 16", par le signal DC9.

Le signal d'horloge CLK1 est obtenu en sortie d'un circuit 17' de détection d'état 0 du compteur 16', l'état de ce compteur étant indiqué par son signal de sortie cmp1.

Le circuit de génération du signal RST1 comporte un circuit de détection de coïncidence entre une ligne 3 et une colonne 9, constitué en l'occurrence par une porte "ET" 18' qui reçoit d'une part le signal DL3 et d'autre part le signal DC9.

Un chronogramme de fonctionnement de ces circuits est donné en figure 21.

Le circuit de génération du signal CLK2 comporte un circuit 100 de prise en compte des impulsions du signal SC de synchronisation de colonne à l'intérieur d'une fenêtre temporelle représentée par un signal logique Q6 et s'étendant, pour les lignes 0, 1, 2, 4, 5, 6, 7, 8, de la colonne 9 à la colonne 269, et pour la ligne 3, soit de la colonne 6 à la colonne 269, soit de la colonne 12 à la colonne 269, soit de la colonne 9 à la colonne 269, suivant que le conteneur est justifié négativement ou positivement, ou n'est pas justifié, par rapport à l'unité de multiplexage AU4.

Les fenêtres temporelles correspondantes sont représentées par des signaux logiques Q2, Q3, Q4, Q5, de niveau "1", le circuit 100 consistant alors en une porte "ET" recevant d'une part le signal SC de synchronisation de colonnes, et d'autre part le signal Q6 issu d'une porte "OU" 101 recevant elle-même les signaux Q2, Q3, Q4, Q5.

Le signal Q2 est issu d'un circuit de génération de fenêtre temporelle 102 qui comporte une bascule 103 de type "D"dont la sortie Q fournit le signal Q2 et dont la sortie complementée Q est rebouclée sur l'entrée D, l'entrée CL de remise à zéro recevant le signal SL de synchronisation de ligne, et l'entrée d'horloge recevant le signal de sortie d'une porte "ET" 104 recevant d'une part le signal DC9 de détection de colonne 9 et d'autre part le signal de sortie d'une porte "OU" 105 recevant les signaux DL0, DL1, DL2, DL4, DL5, DL6, DL7, DL8, de détection de lignes 0, 1, 2, 4, 5, 6, 7, 8.

Le signal Q3 est de même issu d'un circuit 106 de génération de fenêtre temporelle constituée de façon analogue au circuit 102, à ceci près que la porte "ET" 104, est remplacée par une porte "ET" 107 recevant les signaux DL3 et DC5 ainsi qu'un signal JNVC4 de détection de justification négative du conteneur VC4.

Le signal Q4 est de même issu d'un circuit 109 de génération de fenêtre temporelle constitué de façon analogue au circuit 106 à ceci près que le signal JNVC4 de détection de justification négative est remplacé par un signal JPVC4 de détection de justification positive.

Le signal Q5 est de même issu d'un circuit 111 de génération de fenêtre temporelle constitué de façon analogue aux circuits 106 et 109 à ceci près que les signaux JNVC4 et JPVC4 sont remplacés par un signal NJVC4 de détection de non justification du conteneur VC4.

On décrit maintenant, en relation avec les figures 22 et 23, les circuits de génération des signaux JNVC4, JPVC4 et NJVC4 de détection de justification négative, ou positive, ou de non justification, du conteneur VC4.

L'indication de justification négative, ou positive, ou de non justification, est donnée par les octets H1VC4 et H2VC4 dont la constitution est rappelée sur la figure 22 où les éléments binaires constitutifs de ces octets sont numérotés de 0 à 7 pour l'octet H1VC4 et de 8 à 15 pour l'octet H2VC4.

Les éléments binaires de numéros 6, 8, 10, 12 et 14, notés I, indiquent, par leur inversion d'une trame à la suivante, une justification positive.

Les éléments binaires de numéros 7, 9, 11, 13, 15, notés D, indiquent, par leur inversion d'une trame à la suivante, une justification négative.

Une absence d'inversion des éléments binaires I et D d'une trame à la suivante indique une absence de justification.

Sur la figure 23 sont représentés les circuits de génération des signaux JNVC4, JPVC4 et NJVC4.

Ces circuits comportent en commun deux registres 200 et 201 qui reçoivent sur leurs entrées de données les octets H1VC4 (n) et H2VC4 (n) relatifs à une trame "n" donnée, issus des registres 10' et 11' représentés sur la figure 17, les entrées d'horloge de ces registres recevant les mêmes signaux d'horloge que ces registres 10' et 11', notés CLKX et CLKY. Sur les sorties de ces registres sont alors obtenus les octets H1VC4 (n-1) et H2VC4 (n-1) relatifs à la trame précédente "n-1".

La génération du signal JPVC4 est obtenue de la façon suivante. Les éléments binaires de numéros 6, 8, 10, 12, 14 des octets H1VC4 (n) et H2VC4 (n), référencés eb6(n), eb8(n), eb10(n), eb12(n), eb14(n), sont appliqués respectivement à une première entrée de cinq portes "ou exclusif" 2020 à 2024. Une deuxième entrée de ces portes "OU exclusif" reçoit les éléments binaires de numéros 6, 8, 10, 12, 14 des octets H1VC4 (n-1) et H2VC4 (n-1) référencés eb6 (n-1), eb8(n-1), eb10(n-1), eb12(n-1) et eb14(n-1). Le signal JPVC4 d'indication de justification positive est obtenu en sortie d'un circuit logique de décision majoritaire 204.

La génération du signal JNVC4 est obtenue de la façon suivante. Les éléments binaires de numéros 7, 9, 11, 13, 14, 15 des octets H1VC4(n) et H2VC4(n) référencés eb7(n), eb9(n), eb11(n), eb13(n), eb15(n) sont appliqués respectivement à une première entrée de cinq portes "ou exclusif" 2050 à 2054. Une deuxième entrée de ces portes "OU exclusif" reçoit les éléments binaires de numéros 7, 9, 11, 13, 15 des octets H1VC4 (n-1) et H2VC4(n-1), référencés eb7(n-1), eb9(n-1), eb11(n-1), eb13(n-1) eb15(n-1). Le signal JNVC4 d'indication de justification négative est obtenu en sortie d'un circuit logique 206 de décision majoritaire.

Le signal JNVC4 d'indication de non justification est obtenu en sortie d'une porte "NI" 207 recevant d'une part le signal JNVC4, d'autre part le signal JPVC4.

On décrit maintenant comment s'effectue la détection du premier octet du conteneur VC31a, en relation avec la figure 25 représentant le circuit mis en oeuvre, avec la figure 26 illustrant le principe de localisation de cet octet et avec la figure 27 représentant, aux réserves près qui seront indiquées par la suite, l'espace occupé par un conteneur VC31 à l'intérieur de deux conteneurs VC4 successifs, d'ordres "m" et "m+1".

Les octets d'indexation H1VC31a et H2VC31a permettent de repérer la position Δ a du premier octet du conteneur VC31a à l'intérieur de l'espace représenté en pointillés sur la figure 27, correspondant à la forme du conteneur VC31a en l'absence de toutes justifications de ce conteneur, au facteur de multiplexage par "4" près avec les autres conteneurs VC31b, VC31c, VC31d, difficilement visualisable sur cette figure. L'espace réel, c'est-à-dire en tenant compte des justifications, diffère et on a indiqué par des hachures un exemple de l'espace occupé par un conteneur VC31 à l'intérieur de deux conteneurs VC4 successifs "m" et "m+1". Dans cet exemple une justification négative intervient. Les octets d'indexation H1VC31a et H2VC31a permettent plus précisément de repérer un emplacement parmi 582 possibles, repérés par des hachures sur la figure 26 et distants de 4 octets pour tenir compte du multiplexage de quatre conteneurs VC31 et de la justification des conteneurs VC31 par un seul octet. On désignera par Δ VC31a la valeur, comprise entre 0 et 581, indiquée par ces signaux d'indexation.

Une fois les octets H1VC31a et H2VC31a détectés, il est procédé à une détection de l'octet H3VC31a de justification du conteneur VC31a, au moyen d'un compteur 30 identique au compteur 24 et fonctionnant de la même façon, à ceci près qu'il est commandé par le signal de sortie CP2 du circuit de détection 25, à travers un détecteur de transition d'un sens donné 30', c'est-à-dire qu'il commence à compter de 0 à 260 à partir de la localisation de l'octet H2VC31a, l'octet H3VC31a se situant en effet 261 octets après l'octet H2VC31a, et au moyen d'un circuit 31 de détection de l'état 260 de ce compteur, dont le signal de sortie CP3 commande, lors de l'arrivée à l'état 260 du compteur 30, le stockage de l'octet correspondant H3VC31a des trames incidentes STM dans un registre 32 recevant sur ses entrées de données parallèle les trames STM et sur son entrée d'horloge le signal CP3.

Une fois les octets H1VC31a, H2VC31a et H3VC31a localisés, il est procédé à une détection du premier octet du conteneur VC31a. Pour ce faire on utilise un compteur 40 qui est remis à zéro, à travers un détecteur de transitions d'un sens donné 40', par un signal RST2, quatre temps-octet après la détection de l'octet H3VC31a et qui est incrémenté par un signal d'horloge CLK4 obtenu à partir du signal SC de synchronisation de colonne des trames incidentes en bloquant les transitions de celui-ci en colonnes 0 à 8 pour les lignes 0, 1, 2, 4, 5, 6, 7, 8, en colonnes 0 à 5 pour la ligne 3 si le conteneur VC4 est justifié négativement par rapport à l'unité de multiplexage AU4, en colonnes 0 à 11 pour la ligne 3 si le conteneur VC4 est justifié positivement par rapport à l'unité de multiplexage AU4, en colonnes 0 à 9 pour la ligne 3 si le conteneur VC4 n'est pas justifié par rapport à l'unité de multiplexage AU4 et, à l'intérieur des transitions ainsi isolées , en n'en prenant en compte qu'une sur quatre. Les différentes valeurs susceptibles d'être prises par ce compteur correspondent aux valeurs 0 à 581 indiquées sur la figure 26. Le signal de sortie CMP4 de ce compteur 40 est appliqué à un comparateur 41 qui reçoit par ailleurs la valeur Δ VC31a. Lorsque l'état du compteur 40, indiqué par son signal de sortie CMP4, atteint cette valeur, cela signifie que l'emplacement correspondant est celui occupé par le premier octet du conteneur VC31a. Le signal CP4 de sortie du comparateur 41 présente à cet instant une transition.

On décrit maintenant le circuit de génération du signal d'horloge CLK4 et du signal RST2.

Le signal CLK2 est appliqué à l'entrée d'horloge d'un compteur par quatre 120 qui est remis à zéro, à travers un détecteur de transition d'un sens donné 120', par le signal RST2. Le signal cmp2 de sortie du compteur 120 est appliqué à un circuit 121 de détection d'état 0 de l'état de comptage de ce compteur. Le signal d'horloge CLK4 est obtenu en sortie du circuit 121.

Le signal RST2 est obtenu en sortie d'un circuit 122 de détection d'état de comptage 3 d'un compteur 123 qui s'autobloque à 3, l'état de ce comptage de ce compteur étant indiqué par son signal de sortie cmp3, et ce compteur étant incrémenté par le signal SC de synchronisation de colonne et remis à zéro par le signal CP3, à travers un détecteur de transitions d'un sens donné 123'.

Une fois le premier octet du conteneur VC31a localisé, la localisation des octets suivants de ce conteneur se fait, ainsi qu'illustré à la figure 29, au moyen d'un compteur, référencé 50''', remis à zéro, à travers un détecteur de transitions d'un sens donné 50', par le signal CP4, à la détection du premier octet du conteneur VC31a, et comptant "modulo 4" au rythme d'un signal d'horloge CLK5 obtenu à partir du signal SC de synchronisation de colonne des trames incidentes en le bloquant, afin de ne prendre en compte que des octets constitutifs du conteneur VC31a :

- durant les colonnes 0 à 8 des lignes 0, 1, 2, 4, 5, 6, 7, 8 des trames incidentes,
- durant les colonnes 0 à 5 de la ligne 3 des trames incidentes si le conteneur VC4 est justifié négativement par rapport à l'unité de multiplexage AU4,
- durant les colonnes 0 à 11 de la ligne 3 des trames incidentes si le conteneur VC4 est justifié positivement par rapport à l'unité de mutliplexage AU4,
- durant les colonnes 0 à 8 de la ligne 3 des trames incidentes si le conteneur VC4 n'est pas justifié par rapport à l'unité de multiplexage AU4,
- durant les octets constitutifs des signaux de service POHVC4,
- durant les octets d'indexation H1VC31 et H2VC31 des quatre conteneurs VC31.

La détection des octets suivants du conteneur VC31a se fait plus précisément au moyen d'un circuit 50'' de détection des passages à l'état 0 du compteur 50''' fournissant un signal CP6, l'état de ce compteur étant indiqué par son signal de sortie cmp6.

La détection des octets H1VC31, et H2VC31 se fait de la façon qui a été décrite précédemment pour le conteneur VC31a.

La détection des octets constitutifs des signaux de service POHVC4 est obtenue, comme représenté sur la figure 28, par détection, au moyen d'un détecteur 51', des huit passages par zéro successifs d'un compteur 51''' comptant de 0 à 260 (nombre d'octets séparant deux octets successifs de POHVC4 dans un conteneur VC4) au rythme du signal d'horloge CLK2, et à partir de la détection du premier octet, J1, du conteneur VC4, réalisée de façon analogue à celle décrite en relation avec la figure 19, par détection d'égalité entre les états de comptage CMP1 du compteur 20' et la valeur Δ VC4, au moyen d'un comparateur 52'' fournissant un signal de sortie CP5 présentant une transition d'un sens donné à la détection de cette égalité, et étant appliqué, à travers un détecteur de transition dudit sens donné 52', à l'entrée de commande de remise à zéro du compteur 51''' pour commander le comptage de celui-ci lors de cette détection.

On décrit maintenant, le circuit de génération du signal d'horloge CLK5.

Ce circuit comporte un circuit 130, constitué en l'occurence par une porte "ET"', de prise en compte des impulsions du signal SC de synchronisation de colonnes lorsque les conditions suivantes sont simultanément réalisées (cette simultanéité étant détectée au moyen d'une porte "ET" 131) :

- présence de l'une des fenêtres temporelles représentée par les signaux Q2, Q3, Q4, Q5 (d'où une application du signal Q6 de sortie de la porte OU 101 (figure 20) en entrée de la porte ET 131)
- absence de détection d'un octet de POHVC4 (d'où une application du signal CP7, inversé au moyen d'un inverseur 132, à la porte ET 131)

- absence de détection d'un octet d'indexation H1VC31 ou H2VC31 de l'un des quatre conteneurs VC31 (d'où une application en entrée de la porte ET 131 du signal, inversé, au moyen d'un inverseur 133, issu d'une porte OU 134 recevant elle-même en entrée les signaux CP1 et CP2 relatifs aux quatre conteneurs et affectés en conséquence des indices a pour le conteneur VC31a, b pour le conteneur VC31b, c pour le conteneur VC31c, d pour le conteneur VC31d).

Les octets formant le conteneur VC31a ainsi détectés et extraits des trames incidentes STM aux instants concernés sont stockés dans une mémoire-tampon 60 (représentée sur la figure 30) au fur et à mesure de leur détection, une ou deux écritures dans la mémoire-tampon 60, c'est-à-dire une ou deux impulsions du signal CP'6 de sortie du détecteur 50", étant retirées, comme décrit ci-après, suivant que le conteneur VC31a n'est pas justifié ou est justifié positivement.

La détection de non justification ou de justification positive du conteneur VC31a est obtenue de façon similaire à celle décrite plus haut pour le conteneur VC4, à partir cette fois des signaux d'indexation H1VC31a et H2VC31a constitués de la même façon que les signaux d'indexation H1VC4 et H2VC4.

Le signal CP6 est obtenu en sortie d'un circuit 53' de blocage des impulsions du signal CP'6 soit à l'emplacement de l'octet H3VC31a signalé par le signal CP3 (figure 25), ainsi que quatre temps-octets après cet emplacement, soit quatre temps-octets après cet emplacement, suivant l'état des signaux logiques NJVC31a d'indication de non justification et JPVC31a d'indication de justification positive du conteneur VC31a.

Il est procédé de même pour les trois autres conteneurs VC31b, VC31c, VC31d, dont les octets sont stockés respectivement dans trois mémoires-tampons 61, 62, 63 (figure 30).

A chaque octet constitutif d'un conteneur VC31 stocké dans ces mémoires-tampon est par ailleurs associé un élément binaire de marquage repéré respectivement δa, δb, δc, δd, pour les conteneurs VC31a, VC31b, VC31c, VC31d, et indiquant pour cet octet, s'il s'agit ou non d'un premier octet d'un conteneur.

L'inscription de cet élément binaire de marquage est commandée dans le cas du conteneur VC31a par exemple par le signal CP4 fourni par le circuit de détection de premier octet d'un conteneur VC31. L'élément binaire δ a ayant dans l'exemple de réalisation décrit un niveau logique "1" lorsqu'il s'agit effectivement d'un premier octet, est obtenu en sortie d'une porte "ET" 60', recevant sur une première entrée un signal logique de niveau "1" et sur une deuxième entrée le signal CP4.

Soit HE le rythme d'extraction des trames incidentes des octets constitutifs de ces conteneurs, obtenu lui-même dans le cas du conteneur VC31a par exemple par réunion, au moyen d'une porte logique 53, des transitions du signal de sortie CP4 du comparateur 41 (figure 25) et du signal de sortie CP6 du détecteur 50" (figure 29).

L'affectation des temps-octets des trames sortantes restructurées à ces octets est fixée par une horloge HL' (HL'a dans le cas du conteneur VC31a par exemple) déterminée elle-même, dans une base de temps 80, à partir des signaux de synchronisation (de trame ST*, de ligne SL*, et de colonne SC*) des trames sortantes restructurées de manière à avoir, pour chaque conteneur à traiter, une affectation des octets constitutifs de ce conteneur par colonnes à l'intérieur des trames restructurées.

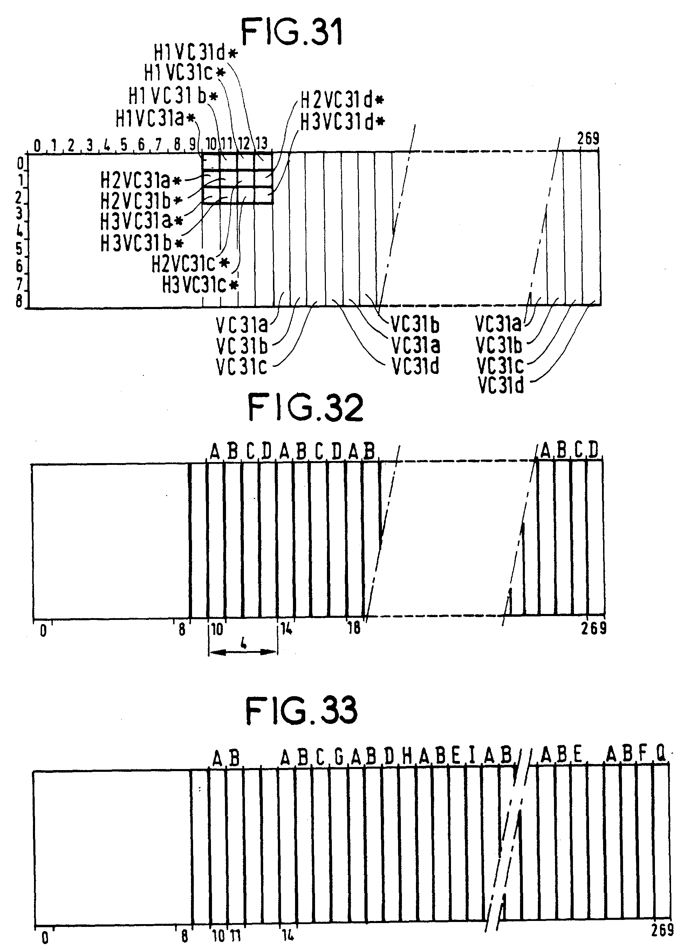

Cette affectation par colonnes est illustrée sur la figure 31 dans le cas où les conteneurs considérés sont des conteneurs VC31.

L'affectation se fait de la façon suivante :

- les colonnes 14, 18.................... 266, ainsi que la colonne 10 pour les lignes 2 à 8, sont affectées au conteneur VC31a
- les colonnes 15, 19.................... 267, ainsi que la colonne 11 pour les lignes 2 à 8, sont affectées au conteneur VC31b
- les colonnes 16, 20.................... 268, ainsi que la colonne 12 pour les lignes 2 à 8, sont affectées au conteneur VC31c
- les colonnes 17, 21,................... 269, ainsi que la colonne 13 pour les lignes 2 à 8, sont affectées au conteneur VC31d.

Les octets des colonnes 0 à 9 des lignes 0 à 8 sont des octets de bourrage et/ou de service.

En colonnes 10 à 13 des lignes 0 et 1 sont insérés des octets d'indexation, H1VC31*, H2VC31*, des conteneurs à traiter, affectés des indices a, b, c ou d suivant qu'ils se rapportent au conteneur VC31a, VC31b, VC31c, ou VC31d.

Les octets de justification des conteneurs à traiter dans les trames restructurées permettent d'adapter le rythme de l'horloge de lecture, HL, au rythme de l'horloge d'écriture HE des mémoires-tampons, par exemple le rythme de l'horloge de lecture HLa au rythme de l'horloge d'écriture HEa dans le cas de la mémoire-tampon 60. Cette adaptation de rythme se fait de façon classique, au moyen d'un dispositif d'élaboration de demande de justification/non justification et d'un circuit de blocage de l'horloge HL', repérés respectivement 64 et 64' dans le cas du conteneur VC31a, le dispositif d'élaboration de demande de justification/non justification procédant par comparaison de phase entre l'horloge HE et l'horloge HL issue du circuit de blocage de l'horloge HL'. Selon que le résultat de cette comparaison, pour une trame donnée, dépasse un premier seuil d'un signe donné ou un second seuil de signe opposé au premier ou se trouve entre ces deux seuils, il est élaboré pour cette trame une demande de justification positive ou négative ou une demande de non justification. Cette demande de non justification ou de justification positive ou négative est prise en compte dans la trame suivante et provoque alors, dans le premier cas, l'insertion d'un octet de bourrage à l'emplacement, fixe dans cette trame, de l'octet de justification H3VC31* correspondant, cet emplacement étant situé en colonne 10, ligne 2 dans le cas du conteneur VC31a par exemple, dans le deuxième cas, l'insertion d'un octet de bourrage à cet emplacement et à l'emplacement situé quatre temps-octet après et, dans le troisième cas, l'absence d'insertion d'octet de bourrage dans celles des colonnes 10 à 269 affectées au conteneur considéré.

La demande de justification ou non justification élaborée par le dispositif 64 pour la trame considérée y est donc mémorisée jusqu'à la trame suivante, la remise à zéro de la mémoire réalisant cette fonction, commandée par la base de temps 80, intervenant respectivement aux emplacements situés en colonnes 14, 15, 16, 17 de la ligne 2 pour les conteneurs VC31a, VC31b, VC31c, VC31d.

L'horloge de lecture HL des mémoires tampon est donc obtenue à partir de l'horloge HL'(issue elle-même de la base de temps 80 et obtenue à partir du signal de synchronisation de colonnes SC* des trames restructurées, en bloquant systématiquement ce signal de synchronisation aux emplacements d'octet non affectés au conteneur VC31 considéré et indiqués précédemment) en effectuant ou non certains blocages sur cette horloge HL' suivant l'état de demande de justification/non justification pour le conteneur VC31 pour la trame précédente.

Ainsi l'horloge de lecture HLa est obtenue à partir de l'horloge HL'a en bloquant cette dernière horloge en colonne 10 et 14 de la ligne 2 en cas de justification positive du conteneur VC31a dans les trames restructurées ou en colonne 10 de la ligne 2 en cas de non justification du conteneur VC31a dans les trames restructurées, ou en n'effectuant aucun blocage en cas de justification négative du conteneur VC31a dans les trames restructurées.

Le circuit de blocage 64' reçoit de la base de temps 80, outre l'horloge HL'a, un signal de synchronisation SYa repérant les emplacements indiqués ci-dessus, le circuit de blocage 64' reçoit également des signaux de commande C issus du dispositif d'élaboration de demande de justification/non justification 64 indiquant les demandes de justification ou de non justification du conteneur VC31a dans les trames restructurées.

La valeur, dite par la suite "calculée", des octets d'indexation H1VC31* H2VC31* à insérer en colonne 10 à 13 des lignes 0 et 1 d'une trame restructurée donnée, au cours de la formation de cette trame, est calculée, pour le conteneur VC31a par exemple, par un circuit 65 de calcul de valeur de signaux d'indexation de ce conteneur, à partir de la valeur, dite "observée", de ces octets d'indexation pour la trame précédente, déterminée au cours de la constitution de cette trame précédente (de la façon décrite ci-après) en ajoutant la valeur "1", "-1" ou "0" à cette valeur, au moyen d' un sommateur 66 recevant des signaux de commande C issus du dispositif 64, suivant qu'une demande de justification, positive, ou négative, a été faite, ou qu'aucune demande de justification n'a été faite.

La valeur "observée" des octets d'indexation est obtenue de la façon suivante, en considérant par exemple les octets H1VC31a* et H2VC31a* du conteneur VC31a.

Un compteur 67, remis à zéro par un signal RST en colonne 14 de la ligne 2 (détectée à partir des signaux de synchronisation, de trame ST*, de ligne SL*, et de colonne SC*, des trames sortantes restructurées) est incrémenté par un signal d'horloge CLK obtenu à partir du signal de synchronisation de colonne SC* des trames sortantes restructurées en prenant en compte un octet sur quatre et en le bloquant en colonnes 0 à 9 des lignes 3 à 8 et en colonnes 0 à 13 des lignes 0 à 2. Lorsqu'un premier octet d'un conteneur VC31a est détecté en sortie de la mémoire tampon 60, grâce à l'élément binaire δ a de marquage correspondant, l'état de comptage de ce compteur, correspondant à la valeur recherchée, est stocké dans un registre 68 dont l'entrée d'horloge reçoit l'élément binaire δ a, lu dans la mémoire tampon 60, les entrées de données de ce registre étant reliées aux sorties du compteur 67.

Les trames restructurées STM* sont obtenues en sortie d'un multiplexeur 74 dont les entrées de données sont connectées aux circuits de calcul de valeur de signaux d'indexation H1VC31* et H2VC31* (ces circuits étant reperés respectivement 65, 69, 70, 71 pour les conteneurs VC31a, VC31b, VC31c et VC31d), aux sorties des quatre mémoires-tampons 60, 61, 62, 63 de signaux constitutifs des conteneurs VC31a, VC31b, VC31c, VC31d et aux sorties d'une source 75 de signaux de bourrage et/ou de service.

Les entrées de commande du multiplexeur 74 reçoivent des signaux SY issus de la base de temps 80, permettant de réaliser une insertion des signaux d'indexation en colonnes 10, 11, 12, 13 des lignes 0 et 1, une insertion de signaux de bourrage et/ou de service en colonnes 0 à 9 des lignes 0 à 8, et une insertion de signaux constitutifs des conteneurs à traiter telle que décrite ci-dessus.

Dans le cas du conteneur VC31a par exemple, l'insertion de signaux de bourrage en colonnes 10 et 14 de la ligne 2 en cas de justification positive de ce conteneur, ou en colonne 10 de la ligne 2 en cas de non justification de ce conteneur, peut être obtenue simplement par relecture d'un octet stocké dans la mémoire tampon 60, cette relecture résultant du blocage de l'horloge de lecture de cette mémoire-tampon à ces emplacements.

Sur la figure 32 est représentée l'affectation des colonnes des trames restructurées aux différentes unités de multiplexage restructurées TU31*. Soient ABCD les colonnes affectées respectivement aux unités de multiplexage restructurées TU31*a, TU31b*, TU31*c, TU31*d.

Les colonnes A sont constituées des colonnes 10, 14 266

Les colonnes B sont constituées des colonnes 11, 15 267

Les colonnes C sont constituées des colonnes 12, 16 268

Les colonnes D sont constituées des colonnes 13, 17 269

Le nombre de colonnes affectées par trame à chaque unité de multiplexage restructurée TU31* est égal au nombre d'octets affectés à l'unité de multiplexage correspondante dans une trame non restructurée, divisé par le nombre de lignes, soit $\frac{585}{9}$, égal à 65.

La figure 33 illustre l'affectation des colonnes des trames restructurées aux unités de multiplexage restructurées TU31a*, TU31b*, TU22a* à TU22f*, TU11a* à TU11e*, TU12a* à TU12d* dans le cas de la structure de multiplexage décrite avec la figure 2, et où les conteneurs à traiter seraient les conteneurs VC31a, VC31b, VC22a à VC22f, VC11a à VC11e, VC12a à VC12d.

Soient ABCD ...Q les colonnes affectées respectivement à ces unités de multiplexage restructurées. Les colonnes 10 et 11 sont respectivement des colonnes A et B affectées respectivement aux unités de multiplexage restructurées TU31a* et TU31b* et contiennent par exemple en lignes 0 et 1 les octets d'indexation H1VC31a*, H1VC31b*, H2VC31a* et H2VC31b* et en ligne 2 les octets de justification H3VC31a* et H3VC31b*. Les autres unités de multiplexage restructurées étant de niveau hiérarchique inférieur, les colonnes 12 et 13 contiennent des octets de bourrage.

De la colonne 14 à la colonne 77, l'organisation en colonnes est la suivante : ABCG ABDH ABEI ABFN ABCG ABDH ABEJ ABFO ABCG ABDH ABEK ABFP ABCG ABDH ABEL ABFQ. De la colonne 78 à la colonne 141 puis de la colonne 142 à la colonne 205 et enfin de la colonne 206 à la colonne 269, cette organisation se répète à ceci près toutefois que les colonnes 89, 105, 121, 137, puis les colonnes 153, 169, 185, 201, et enfin les colonnes 217, 233, 249, 265 sont respectivement des colonnes M, I, J, K, puis des colonnes L, M, I, J et enfin des colonnes K, L, M, de bourrage, au lieu d'être des colonnes I, J, K, L comme le sont respectivement les colonnes 25, 41, 57, 73.

Dans cet exemple, le rythme d'extraction des trames restructurées des signaux constitutifs des unités de multiplexage à brasser est obtenu à partir du signal de synchronisation de colonne SC * des trames restructurées, en bloquant celui-ci en colonnes 0 à 9 des lignes 0 à 8.

Dans l'exemple de réalisation du générateur d'adresses d'écriture de la mémoire de signaux à brasser donné sur les figures 7, 8 et 9, le signal ainsi obtenu constitue le signal d'horloge CK utilisé pour l'incrémentation des compteurs de ce générateur. Le signal RAZ de remise à zéro de ces compteurs est obtenu à partir du signal de synchronisation de colonne SC* des trames restructurées en le bloquant partout sauf en colonne 10 et colonne 14 des lignes 0 à 8.

Ainsi que précisé ci-avant lors de la description en regard des figures 7, 8 et 9, les compteurs de ce générateur d'adresses d'écriture alors sélectionnés par le circuit 14 de sélection appartiennent à l'ensemble 4 de compteurs.

On notera que dans le cas d'une structure de multiplexage "US", où les compteurs de ce générateur d'adresses alors sélectionnés par le circuit 14 appartiennent à l'ensemble 5 de compteurs, le signal d'horloge CK utilisé pour l'incrémentation de ces compteurs est alors obtenu en bloquant le signal de synchronisation de colonnes des trames restructurées en colonnes 0 à 11 des lignes 0 à 8, les signaux constitutifs des unités de multiplexage à brasser étant alors rangées dans les colonnes 12 à 269 des lignes 0 à 8. Par ailleurs, le signal RAZ de remise à zéro de ces compteurs est alors obtenu à partir du signal de synchronisation de colonnes des trames restructurées en le bloquant partout sauf en colonne 12 et colonne 18 des lignes 0 à 8.

## Revendications

1. Unité de commutation élémentaire pour équipement de brassage de trains numériques multiplexés par multiplexage temporel d'affluents numériques à différents débits suivant une hiérarchie de multiplexage synchrone aux différents niveaux de laquelle sont susceptibles d'être introduits des affluents et sont constituées des entités appelées unités de multiplexage formées suivant le cas soit de signaux multiplex issus du multiplexage d'unités de multiplexage de niveau hiérarchique inférieur, soit de signaux issus d'affluents; ladite unité de commutation élémentaire étant apte à assurer une distribution suivant une loi déterminée des signaux constitutifs d'unités de multiplexage, dites unités de multiplexage à brasser, de trames entrantes portées par une pluralité de supports de transmission entrant dans cette unité de commutation élémentaire, sur les trames sortantes portées par un support de transmission sortant de cette unité de commutation; comportant pour chaque support de transmission de trames entrantes :

   - des moyens d'extraction de signaux (SCB) constitutifs d'unités de multiplexage à brasser desdites trames entrantes,
   - une mémoire (1), dite mémoire de signaux constitutifs d'unités de multiplexage à brasser, apte à contenir au moins N signaux, où N désigne la période de répétition dans les trames entrantes de l'affluent de plus faible débit de la hiérarchie de multiplexage,
   - des moyens (2, 3) pour assurer une écriture de cette mémoire, en synchronisme avec le rythme d'extraction desdits signaux, à des adresses distinctes pour des signaux constitutifs d'unités de multiplexage à brasser distinctes, et à des adresses identiques pour des signaux constitutifs d'une même unité de multiplexage à brasser, la fréquence de réécriture de chaque adresse étant liée à la période de répétition, dans les trames entrantes, des signaux écrits à cette adresse,

- des moyens (20, 21, 22) pour assurer une lecture de cette mémoire, en synchronisme avec le rythme d'insertion dans les trames sortantes de signaux constitutifs d'unités de multiplexage à brasser à des adresses déterminées par ladite loi de distribution;

et étant caractérisée en ce que les adresses de lecture de la mémoire (1) de signaux constitutifs d'unités de multiplexage à brasser sont obtenues par lecture, en synchronisme avec ledit rythme d'insertion, d'une mémoire (20) dite mémoire de connexion, contenant ladite loi de distribution sous la forme d'une correspondance entre ledit rythme d'insertion et les adresses des différentes mémoires de signaux constitutifs d'unités de multiplexage à brasser de cette unité de commutation élémentaire, à des adresses distinctes pour des signaux constitutifs d'unités de multiplexage à brasser distinctes et à des adresses identiques pour des signaux constitutifs d'une même unité de multiplexage à brasser, la fréquence de relecture des adresses de la mémoire de connexion (20) étant liée à la période de répétition des signaux constitutifs des unités de multiplexage à brasser à insérer dans les trames sortantes aux instants correspondants et égale à la période des signaux à lire aux adresses correspondantes de la mémoire de signaux constitutifs d'unités de multiplexage à brasser.

2. Unité de commutation selon la revendication 1, caractérisée en ce que, ladite hiérarchie de multiplexage comportant différentes structures de multiplexage possibles suivant le débit des affluents à multiplexer, et lesdits niveaux hiérarchiques multiplexant chacun les signaux incidents avec un facteur de multiplexage déterminé, les périodes respectives des signaux à écrire dans la mémoire (1) de signaux constitutifs de conteneurs à brasser sont obtenues par lecture périodique d'une mémoire (3), dite mémoire de description de trames entrantes, en synchronisme avec ledit rythme d'extraction, cette dernière mémoire étant apte à contenir au moins M mots de m éléments binaires, où M désigne la valeur maximale pour l'ensemble des structures de multiplexage possibles, du produit des facteurs de multiplexage de ces structures, à l'exception de ceux s'appliquant à des niveaux hiérarchiques où ne peuvent être multiplexés que des signaux issus d'affluents, et m désigne le nombre d'éléments binaires nécessaires pour coder le nombre maximal possible de périodes différentes des affluents dans les trames entrantes.

3. Unité de commutation selon l'une des revendications 1 et 2, caractérisée en ce que les moyens (2, 3) pour assurer une écriture de la mémoire (1) de signaux constitutifs de conteneurs à brasser à des adresses distinctes pour des signaux constitutifs d'unités de 'multiplexage à brasser distinctes comportent des moyens (4, 5) pour assurer un adressage séquentiel de cette mémoire.

4. Unité de commutation selon l'une des revendications 1 à 3, caractérisée en ce que dans le cas de trames entrantes découpées en sections de même longueur dans lesquelles les unités de multiplexage à brasser ne sont susceptibles d'occuper que des emplacements élémentaires prédéterminés, de position définie par rapport au début de ces sections, et invariables, pour une même unité de multiplexage, d'une section de trame à une autre et d'une trame à une autre, le rythme (CK) d'extraction des signaux constitutifs d'unités de multiplexage à brasser est obtenu à partir du signal de synchronisation d'emplacements élémentaires de ces trames en bloquant celui-ci en dehors desdits emplacements élémentaires prédéterminés.

5. Unité de commutation selon la revendication 1, caractérisée en ce que, ladite hiérarchie de multiplexage comportant différentes structures de multiplexage possibles suivant le débit des affluents à multiplexer, et lesdits niveaux hiérarchiques multiplexant chacun les signaux incidents avec un facteur de multiplexage déterminé, les périodes de répétition des signaux constitutifs d'unités de multiplexage à brasser à insérer dans les trames sortantes sont obtenues par lecture périodique d'une mémoire (22), dite mémoire de description de trames sortantes, en synchronisme avec le dit rythme d'insertion, cette mémoire étant apte à contenir au moins M mots de m éléments binaires, où M désigne la valeur maximale, pour l'ensemble des structures de multiplexage possibles, du produit des facteurs de multiplexage de ces structures, à l'exception de ceux s'appliquant à des niveaux hiérarchiques où ne peuvent être multiplexés que des signaux issus d'affluents, et m désigne le nombre d'éléments binaires nécessaires pour coder le nombre maximal possible de périodes différentes des affluents dans les trames sortantes.

6. Unité de commutation selon la revendication 1, caractérisée en ce que les moyens (21, 22) pour assurer une lecture de la mémoire de connexion (20) à des adresses distinctes pour des signaux constitutifs d'unités de multiplexage à brasser distincts comportent des moyens (21) pour assurer un adressage séquentiel de cette mémoire.

**7.** Unité de commutation selon l'une des revendications 1 à 6, caractérisée en ce que dans le cas de trames sortantes découpées en sections de même longueur dans lesquelles les unités de multiplexage à brasser ne sont susceptibles d'occuper que des emplacements élémentaires prédéterminés, de position définie par rapport au début de ces sections, et invariables, pour une même unité de multiplexage, d'une section de trame à une autre et d'une trame à une autre, le rythme d'extraction (CK) des signaux constitutifs d'unités de multiplexage à brasser est obtenu à partir du signal de synchronisation d'emplacements élémentaires des trames en bloquant celui-ci en dehors desdits emplacements élémentaires prédéterminés.

**Patentansprüche**

**1.** Elementare Vermittlungseinheit für eine Verteileinrichtung von durch zeitliche Multiplexierung von digitalen Datenströmen unterschiedlicher Durchsätze multiplexierten digitalen Daten gemäß einer synchronen Multiplexierhierarchie, auf deren verschiedenen Ebenen Datenzuflüsse eingegeben werden können und die Multiplexiereinheiten genannt werden, welche entweder Multiplexsignale sind, die aus der Multiplexierung von Multiplexiereinheiten einer niedrigeren hierarchischen Ebene gebildet werden, oder von Signalen aus den ankommenden Datenströmen gebildet werden, wobei die elementare Vermittlungseinheit gemäß einem bestimmten Gesetz eine Verteilung der Signale, die Multiplexiereinheiten bilden, sogenannte zu verteilende Multiplexiereinheiten, von ankommenden Rahmen, die auf mehreren ankommenden Übertragungskanälen in dieser elementaren Vermittlungseinheit ankommen, auf ausgehende Rahmen bewirkt, die auf einem ausgehenden Übertragungskanal dieser Vermittlungseinheit verlaufen, wobei die Vermittlungseinheit für jeden Übertragungskanal von ankommenden Rahmen aufweist:

- Mittel zur Entnahme von Signalen (SCB) aus den zu verteilenden Multiplexiereinheiten der ankommenden Rahmen,
- einen Speicher (1) für die Signale von zu verteilenden Multiplexiereinheiten, der mindestens N Signale enthalten kann, wobei N die Wiederholperiode in den ankommenden Rahmen von Datenflüssen mit dem kleinsten Durchsatz der Multiplexierhierarchie bezeichnet,
- Mittel (2, 3), um ein Einschreiben in diesen Speicher synchron mit dem Entnahmerhythmus der Signale an unterschiedlichen Adressen für Signale von unterschiedlichen zu verteilenden Multiplexiereinheiten bzw. an gleichen Adressen für Signale einer gleichen zu verteilenden Multiplexiereinheit zu gewährleisten, wobei die Frequenz des Wiedereinschreibens an jeder Adresse mit der Wiederholperiode der an dieser Adresse eingeschriebenen Signale in den ankommenden Rahmen verknüpft ist,
- Mittel (20, 21, 22), um ein Lesen dieses Speichers synchron mit dem Einfügungsrhythmus von Signalen der zu verteilenden Multiplexiereinheiten in die Ausgangsrahmen an durch das Verteilgesetz bestimmten Adressen zu gewährleisten,

dadurch gekennzeichnet, daß die Leseadressen des Speichers (1) für die zu verteilenden Multiplexiereinheiten durch ein mit dem Einfügungsrhythmus synchrones Auslesen eines Verbindungsspeichers (20) erhalten werden, der das Verteilgesetz in Form einer Zuordnung zwischen dem Einfügungsrhythmus und den Adressen der verschiedenen Speicher von Signalen der zu verteilenden Multiplexiereinheiten in dieser elementaren Vermittlungseinheit enthält, und zwar an unterschiedlichen Adressen für Signale von unterschiedlichen zu verteilenden Multiplexiereinheiten und an gleichen Adressen für Signale von einer gleichen zu verteilenden Multiplexiereinheit, wobei die Frequenz des erneuten Auslesens der Adressen des Verbindungsspeichers (20) mit der Wiederholperiode der Signale der zu verteilenden Multiplexiereinheiten verknüpft ist, die in die ausgehenden Rahmen zu den entsprechenden Zeitpunkten eingefügt werden sollen, und der Periode der Signale gebildet, die an den entsprechenden Adressen des Speichers für Signale zu lesen sind, die zu verteilende Multiplexiereinheiten bilden.

**2.** Vermittlungseinheit nach Anspruch 1, dadurch gekennzeichnet, daß, wenn die Multiplexierhierarchie unterschiedliche mögliche Multiplexierstrukturen gemäß dem Durchsatz der zu multiplexierenden Datenflüsse umfaßt und die hierarchischen Ebenen, die je die ankommenden Signale mit einem bestimmten Multiplexierfaktor multiplexieren, und die Perioden der jeweiligen in den Speicher (1) für zu verteilende Container bildende Signale einzuschreibenden Signale durch periodisches Auslesen eines Rahmenbeschreibungsspeichers (3) zur Beschreibung von ankommenden Rahmen synchron mit dem Entnahmerhythmus erhalten werden, wobei dieser letztgenannte Speicher mindestens M Wörter von m Bits aufnehmen kann und M den Höchstwert für die Gesamtheit der möglichen Multiplexierstrukturen aus dem Produkt der Multiplexierfaktoren dieser Strukturen mit Ausnahme derjenigen bezeichnet, die sich auf hierarchische Ebenen beziehen, wo nur Signale aus ankommenden Datenzuflüssen multiplexiert werden können, und wobei m die Anzahl von Bits bezeichnet, die notwendig sind, um die maximal mögliche Anzahl von unterschiedlichen Perioden der Datenzuflüsse in den ankommenden Rahmen zu kodieren.

**3.** Vermittlungseinheit nach einem der Ansprüche 1 und 2, dadurch gekennzeichnet, daß die Mittel (2, 3), um ein Beschreiben des Speichers (1) für Signale von zu verteilenden Containern an unterschiedlichen Adressen für Signale von unterschiedlichen zu verteilenden Multiplexiereinheiten zu bewirken, Mittel (4, 5) aufweisen, um eine sequentielle Adressierung dieses Speichers zu gewährleisten.

**4.** Vermittlungseinheit nach einem der Ansprüche 1 bis 3, dadurch gekennzeichnet, daß im Fall von in Abschnitte gleicher Länge zerschnittenen ankommenden Rahmen, in denen die zu verteilenden Multiplexiereinheiten nur vorbestimmte elementare Stellen einer definierten Lage bezüglich des Beginns dieser Abschnitte einnehmen können, die sich für eine gegebene Multiplexiereinheit von einem Rahmenabschnitt zu einem anderen und von einem Rahmen zu einem anderen nicht ändern, der Entnahmerhythmus (CK) der Signale der zu verteilenden Multiplexiereinheiten ausgehend vom Synchronisationssignal der elementaren Stellen dieser Rahmen erhalten wird, indem dieser Rhythmus außerhalb der vorbestimmten elementaren Stellen blockiert wird.

**5.** Vermittlungseinheit nach Anspruch 1, dadurch gekennzeichnet, daß, wenn die Multiplexierhierarchie unterschiedliche mögliche Multiplexierstrukturen gemäß dem Durchsatz der zu multiplexierenden ankommenden Datenflüsse aufweist und die hierarchischen Ebenen, die jedes der ankommenden Signale mit einem bestimmten Multiplexierfaktor multiplexieren, die Wiederholperioden der Signale von zu verteilenden und in die ausgehenden Rahmen einzufügenden Multiplexiereinheiten sich durch periodisches Lesen eines Speichers (22), der die ausgehenden Rahmen beschreibt, synchron mit dem Einfügungsrhythmus ergeben, wobei dieser Speicher mindestens M Wörter von m Bits enthalten kann und M den Maximalwert aus dem Produkt der Multiplexierfaktoren dieser Strukturen für die Gesamtheit der möglichen Multiplexierstrukturen mit Ausnahme derjenigen bezeichnet, die sich auf hierarchische Ebenen beziehen, in denen nur Signale aus den ankommenden Datenzuflüssen multiplexiert werden können, während m die Anzahl von Binärelementen bezeichnet, die zur Kodierung der maximal möglichen Anzahl von unterschiedlichen Perioden der Datenflüsse in den ausgehenden Rahmen erforderlich sind.

**6.** Vermittlungseinheit nach Anspruch 1, dadurch gekennzeichnet, daß die Mittel (21, 22), die das Auslesen des Verbindungsspeichers (20) an unterschiedlichen Adressen für Signale der unterschiedlichen zu verteilenden Multiplexiereinheiten gewährleisten, Mittel (21) aufweisen, um eine sequentielle Adressierung dieses Speichers zu erlauben.

**7.** Vermittlungseinheit nach einem der Ansprüche 1 bis 6, dadurch gekennzeichnet, daß im Fall von ausgehenden Rahmen, die je in Abschnitte gleicher Länge zerschnitten sind, in denen die zu verteilenden Multiplexiereinheiten nur vorbestimmte elementare Stellen einer definierten Lage bezüglich des Beginns dieser Abschnitte einnehmen können, die sich für eine gegebene Multiplexiereinheit von einem Rahmenabschnitt zum anderen und von einem Rahmen zum anderen nicht ändern, der Entnahmerhythmus (CK) der Signale von zu verteilenden Multiplexiereinheiten aus dem Synchronisationssignal der elementaren Stellen der Rahmen erhalten wird, indem dieser Rhythmus außerhalb der vorbestimmten elementaren Stellen blockiert wird.

## Claims

**1.** Switching element for cross-connect equipment for digital bit streams multiplexed by time-division multiplexing of digital tributaries at different bit rates according to a synchronous multiplexing hierarchy at the various levels of which tributaries can be introduced and constituted by entities called hereinafter multiplexing units, the multiplexing units being formed as appropriate either of multiplex signals obtained by multiplexing lower hierarchy level multiplexing units or signals from tributaries, said switching element being adapted to distribute according to a specific law signals constituting multiplexing units, hereinafter called multiplexing units to be cross-connected, of incoming frames carried by a plurality of incoming transmission media in said switching element to outgoing frames carried by an outgoing transmission medium of said switching element; comprising, for each incoming frame transmission medium:

- means for extracting from said incoming frames signals (SCB) constituting multiplexing units to be cross-connected,
- a memory (1) for signals constituting multiplexing units to be cross-connected adapted to hold at least N signals where N denotes the repetition period in the incoming frames of the lowest bit rate tributary of the multiplexing hierarchy,

- means (2, 3) for writing said memory synchronously with the extraction of said signals, at different addresses for signals constituting different multiplexing units to be cross-connected and at the same addresses for signals constituting the same multiplexing unit to be cross-connected, the frequency at which each address is rewritten being related to the repetition period in th.e incoming frames of the signals written at said address,
- means (20, 21, 22) for reading said memory synchronously with the insertion into the outgoing frames of signals constituting multiplexing units to be cross-connected at addresses determined by said distribution law;

and being characterised in that the read addresses (1) of the memory (1) for signals constituting multiplexing units to be cross-connected are obtained by reading synchronously with said insertion timing a connection memory (20) containing said distribution law in the form of a correspondence table linking said insertion timing and the addresses of the various memories for signals constituting multiplexing units to be cross-connected of said switching element, at different addresses for signals constituting separate multiplexing units to be cross-connected and at the same address for signals constituting the same multiplexing unit to be cross-connected, the frequency with which the connection memory (20) addresses are reread being related to the repetition period of the signals constituting multiplexing units to be cross-connected to be inserted into the outgoing frames at the corresponding times and equal to the period of the signals to be read at the corresponding addresses from the memory for signals constituting multiplexing units to be cross-connected.

**2.** Switching element according to claim 1 characterised in that, said multiplexing hierarchy comprising a plurality of different multiplexing structures for different bit rates of the tributaries to be multiplexed, and said hierarchy levels each multiplexing the incoming signals with a specific multiplexing factor, the respective periods of the signals to be written into the memory (1) for signals constituting containers to be cross-connected are obtained by periodically reading an incoming frame description memory (3) synchronously with said extraction, said memory being adapted to contain at least M words each of m bits where M designates the maximum value for all possible multi.plexing structures of the product of the multiplexing factors of said structures except for those applying at hierarchy levels at which only signals derived from the tributaries can be multiplexed and where m designates the number of bits needed to code the maximum possible number of different periods of tributaries in the incoming frames.

**3.** Switching element according to claim 1 or claim 2 characterised in that the means (2, 3) for writing the memory (1) for signals constituting containers to be cross-connected at different addresses for signals constituting different multiplexing units to be cross-connected comprise means (4, 5) for addressing said memory sequentially.

**4.** Switching element according to any one of claims 1 to 3 characterised in that, in the case of incoming frames broken down into sections of the same length in which the multiplexing units to be cross-connected can occupy only predetermined locations at positions defined relative to the start of said sections and invariant for the same multiplexing unit, from one frame section to another and from one frame to another, the timing signal (CK) for extraction of the signals constituting multiplexing units to be cross-connected is derived from the signal for synchronising locations of said frames by inhibiting it outside said predetermined locations.

**5.** Switching element according to claim 1 characterised in that, said multiplexing hierarchy comprising various possible multiplexing structures for the different bit rates of the tributaries to be multiplexed, and said hierarchy levels each multiplexing the incoming signals with a specific multiplexing factor, the repetition period of signals constituting multiplexing units to be cross-connected to be inserted in the outgoing frames are obtained by periodically reading an outgoing frame distribution memory (22) synchronously with said insertion timing, said memory being adapted to contain at least M words each of m bits where M designates the maximum value for all possible multiplexing structures of the product of the multiplexing factors of said structures except for those applying to hierarchy levels at which only signals derived from tributaries can be multiplexed and m designates the number of bits needed to code the maximum possible number of different periods of tributaries in the outgoing frames.

**6.** Switching element according to claim 1 characterised in that the means (21, 22) for reading the connection memory (20) at different addresses for signals constituting different multiplexing units to be cross-connected comprise means (21) for addressing said memory sequentially.

**7.** Switching element according to any one of claims 1 to 6 characterised in that, in the case of outgoing frames broken down into sections of the same length in which the multiplexing units to be cross-connected can occupy only predetermined locations at defined positions relative to the start of said sections and invariant for the same multiplexing unit from one frame section to another and from one frame to another, the extraction timing (CK) of signals constituting multiplexing units to be cross-connected is derived from the signal for synchronising locations of frames by inhibiting it outside said predetermined locations.

FIG.1

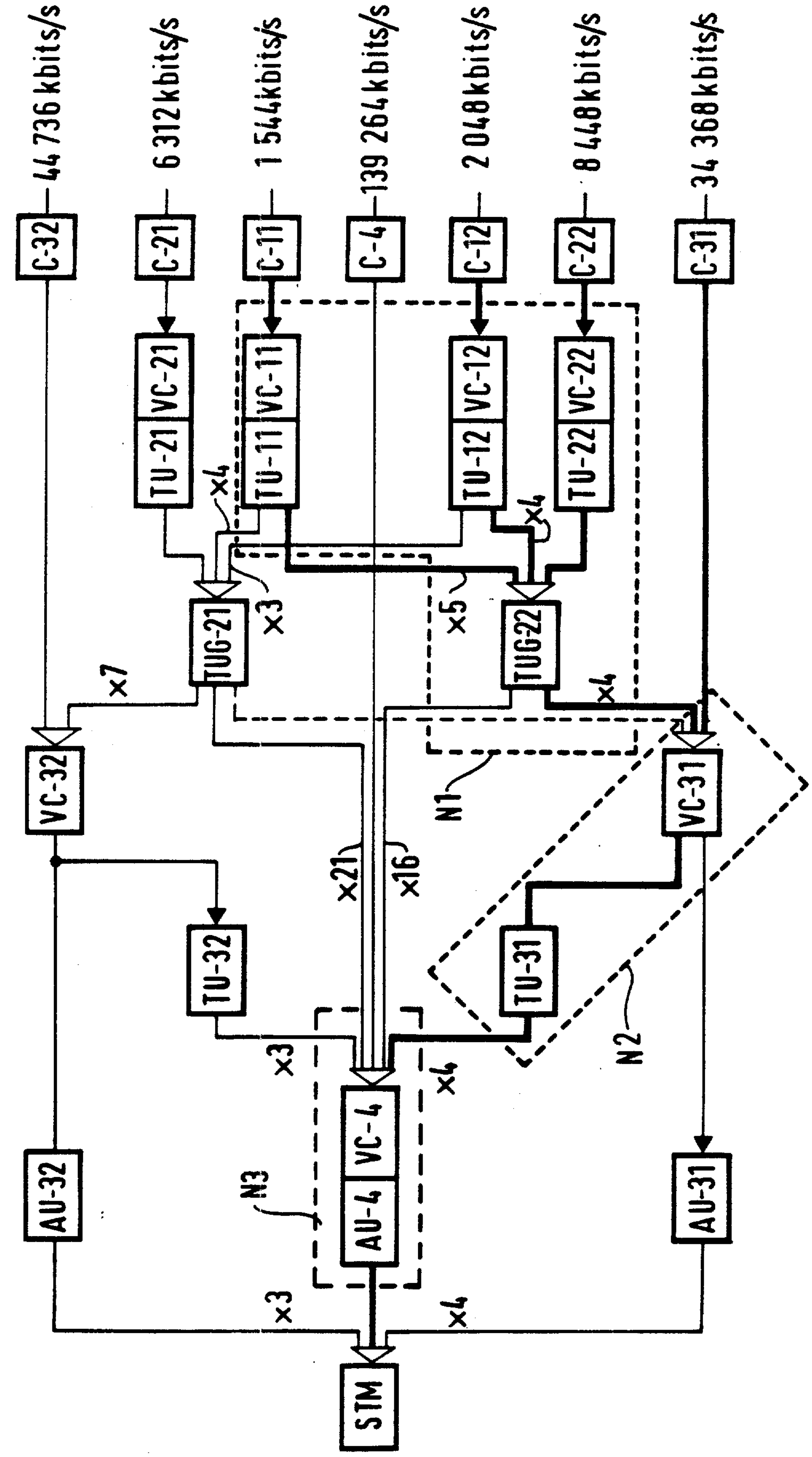
44 736 kbits/s
6 312 kbits/s
1 544 kbits/s
139 264 kbits/s
2 048 kbits/s
8 448 kbits/s
34 368 kbits/s
C-32
C-21
C-11
C-4
C-12
C-22
C-31
VC-21
TU-21
VC-11
TU-11
VC-12
TU-12
VC-22
TU-22
TUG-21
TUG-22
VC-32
VC-31
TU-32
TU-31
VC-4
AU-4
AU-32
AU-31
STM
N1
N2
N3
x4
x3
x5
x7
x21
x16

FIG.2

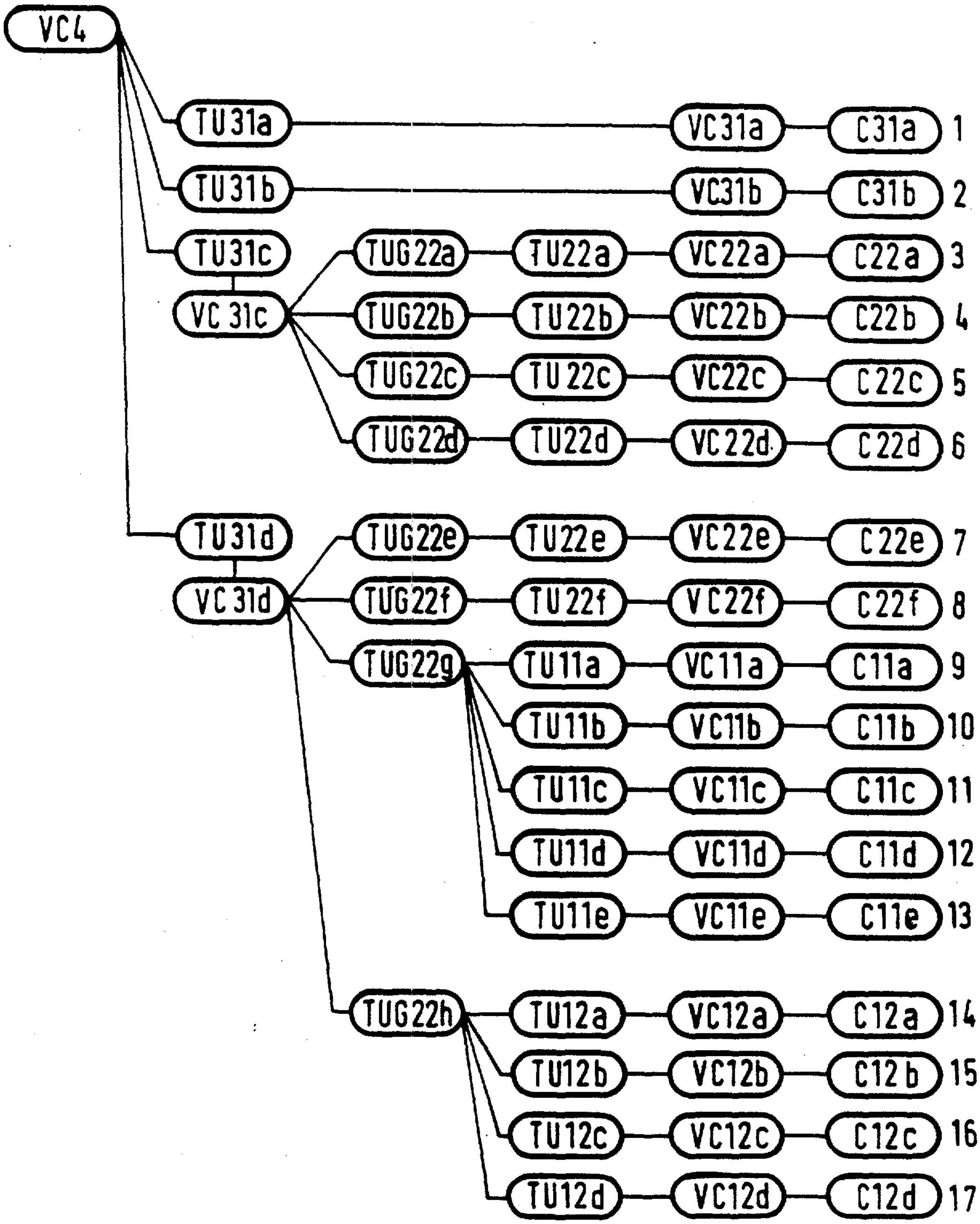
VC4
TU31a
VC31a
C31a
1
TU31b
VC31b
C31b
2
TU31c
VC31c
TUG22a
TU22a
VC22a
C22a
3
TUG22b
TU22b
VC22b
C22b
4
TUG22c
TU22c
VC22c
C22c
5
TUG22d
TU22d
VC22d
C22d
6
TU31d
VC31d
TUG22e
TU22e
VC22e
C22e
7
TUG22f
TU22f
VC22f
C22f
8
TUG22g
TU11a
VC11a
C11a
9
TU11b
VC11b
C11b
10
TU11c
VC11c
C11c
11
TU11d
VC11d
C11d
12
TU11e
VC11e
C11e
13
TUG22h
TU12a
VC12a
C12a
14
TU12b
VC12b
C12b
15
TU12c
VC12c
C12c
16
TU12d
VC12d
C12d
17

FIG.3

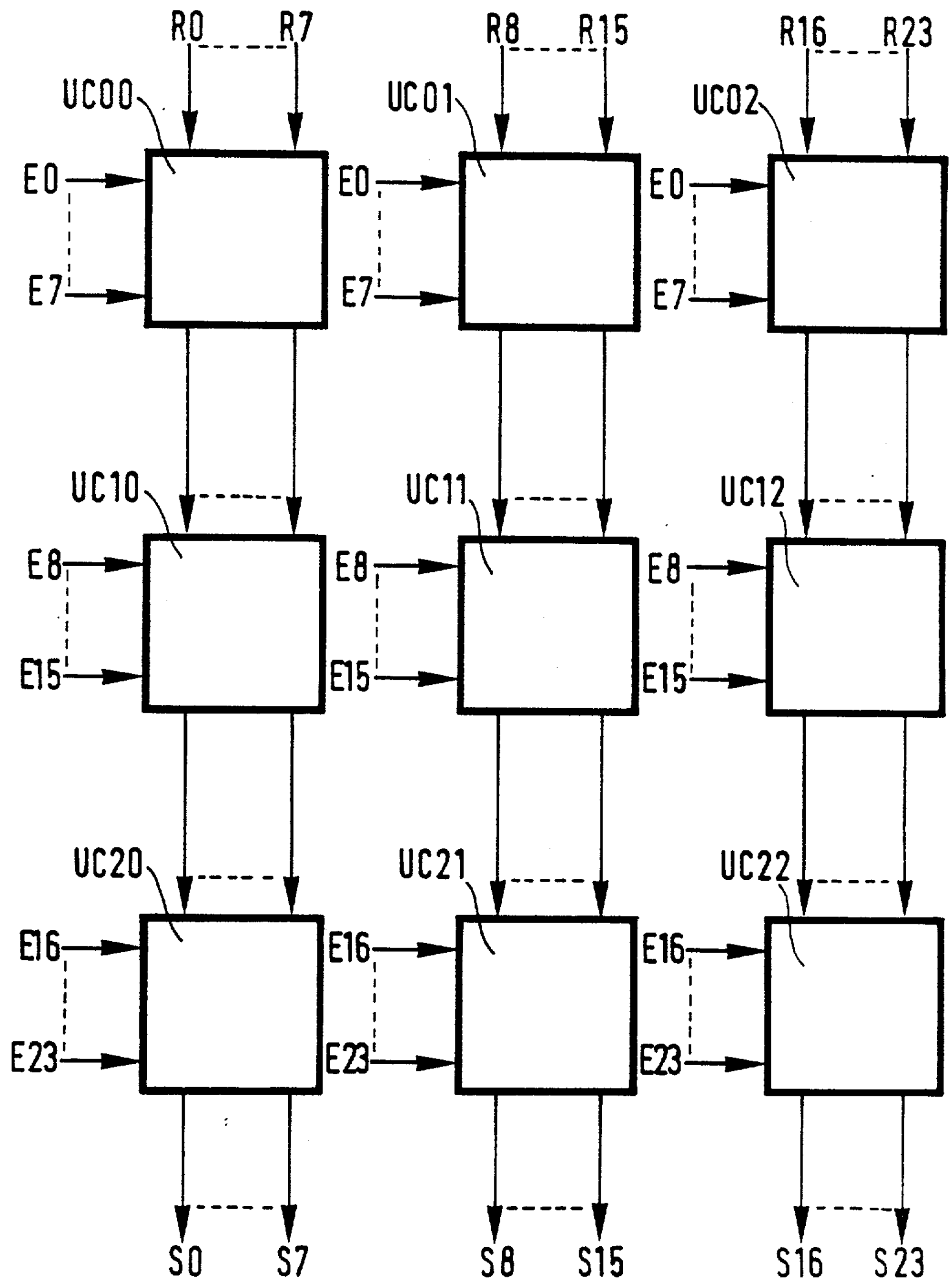
R0
R7
R8
R15
R16
R23
UC00
UC01
UC02
E0
E7
UC10
UC11
UC12
E8
E15
UC20
UC21
UC22
E16
E23
S0
S7
S8
S15
S16
S23

FIG.4

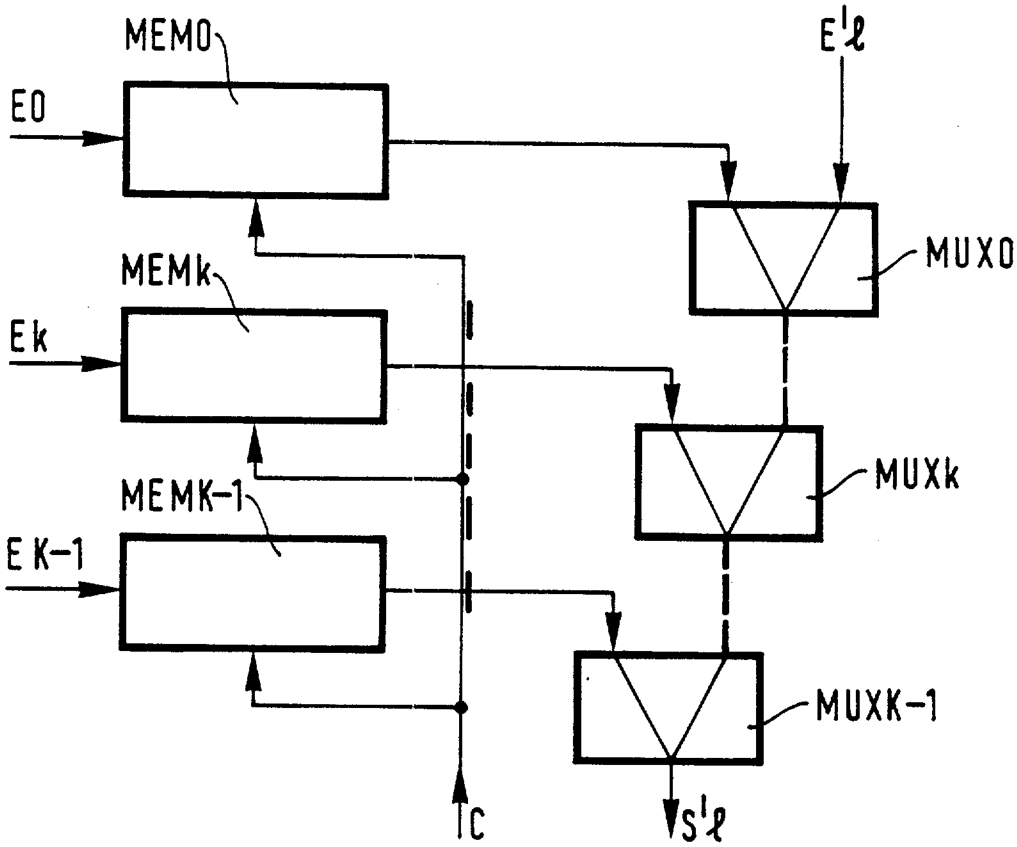
MEM0
E0
MEMk
Ek
MEMK-1
EK-1
C
E'ℓ
MUX0
MUXk
MUXK-1
S'ℓ

FIG.5

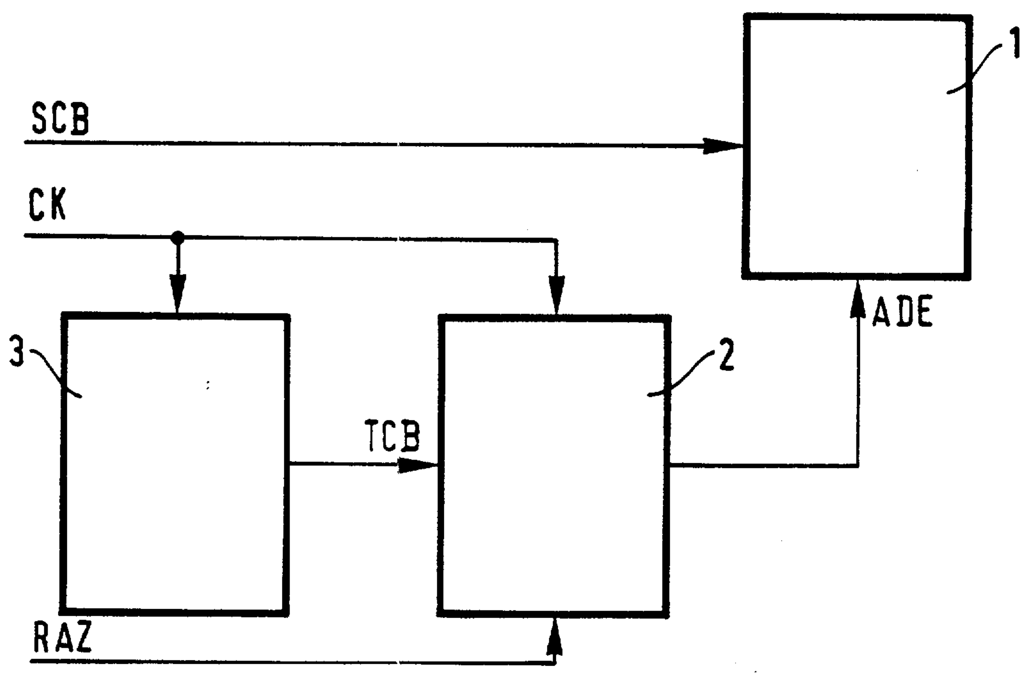
SCB
CK
1
3
2
ADE
TCB
RAZ

FIG.6

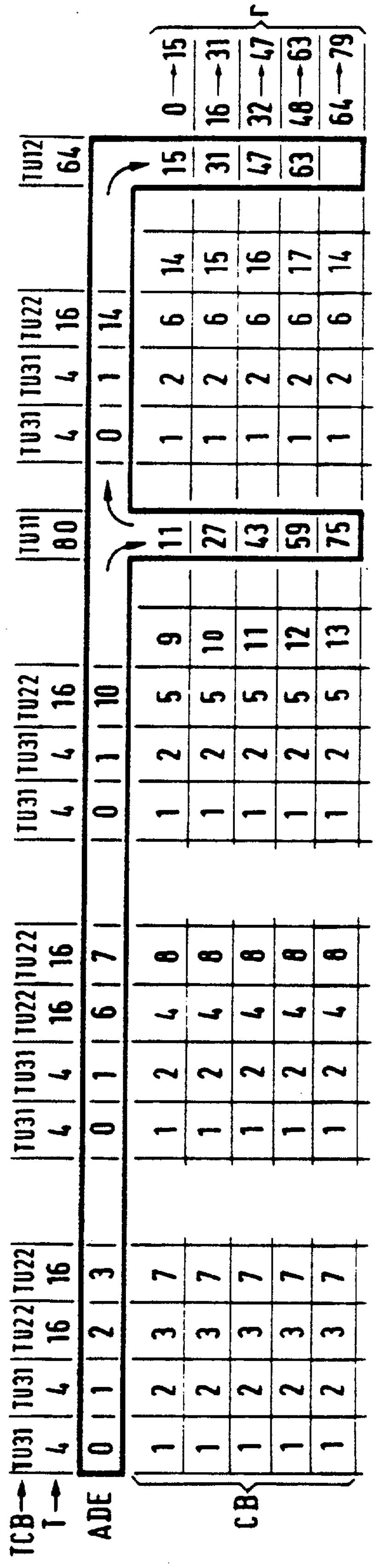

FIG.7

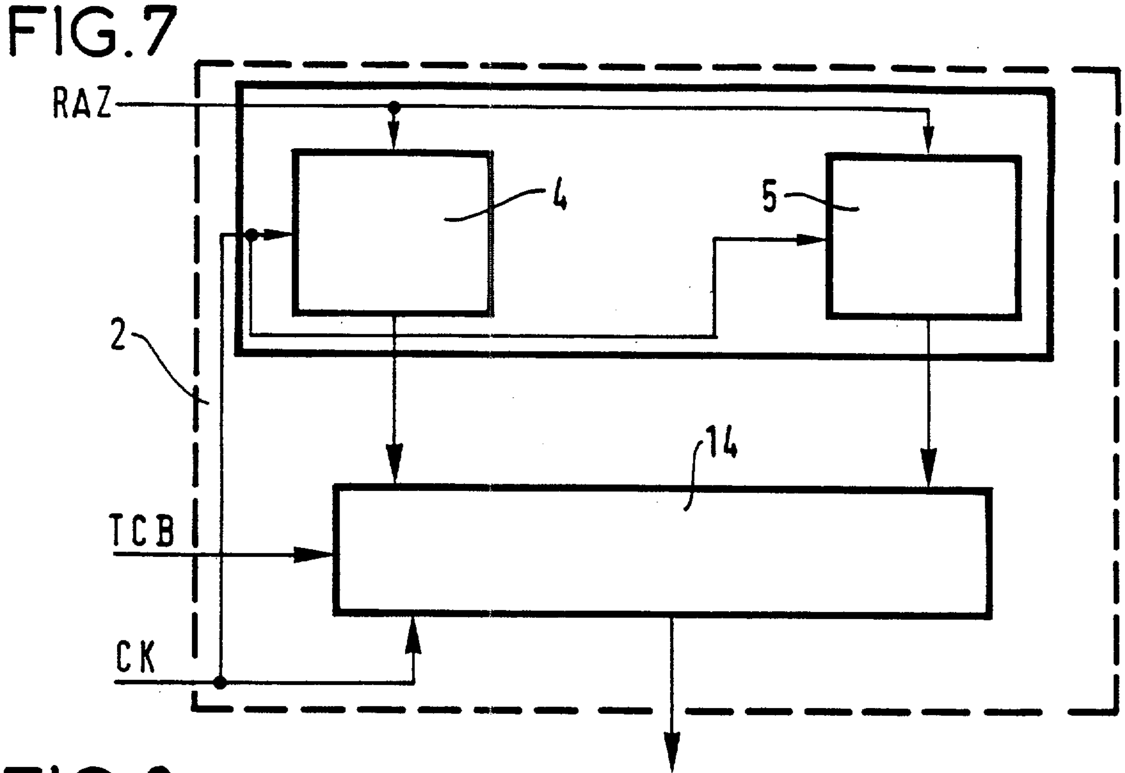


FIG.8

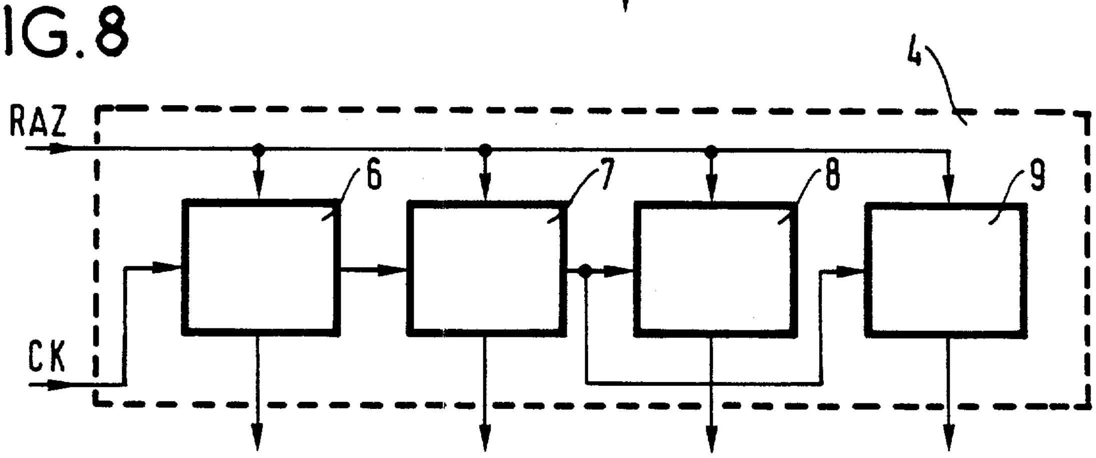


FIG.9

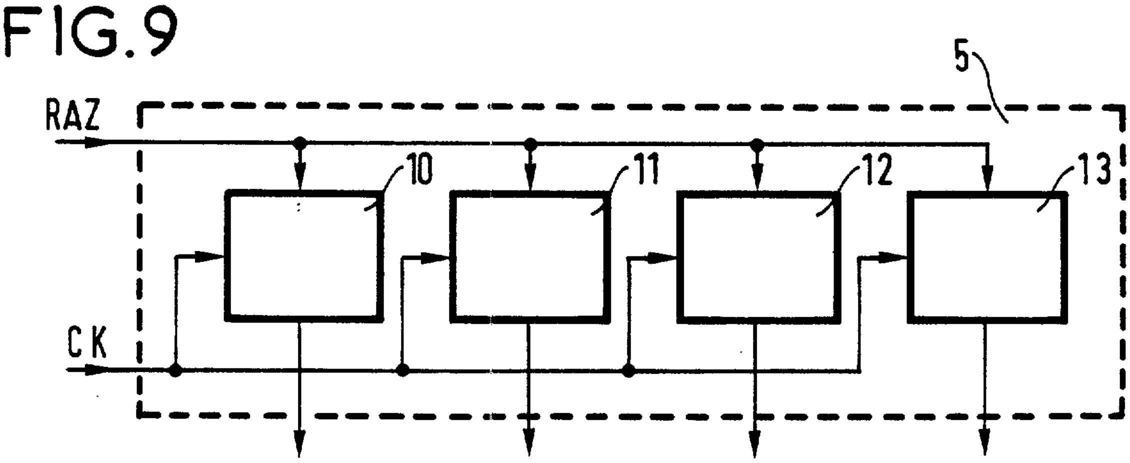

FIG.10

| | T | CS |
|---|---|---|
| I | 4 | 6 |
| I | 16 | 6_7 |
| I | 64 | 6_7_8 |
| I | 80 | 6_7_9 |
| II | 3 | 10 |
| II | 21 | 11 |
| II | 63 | 12 |
| II | 84 | 13 |

FIG.11

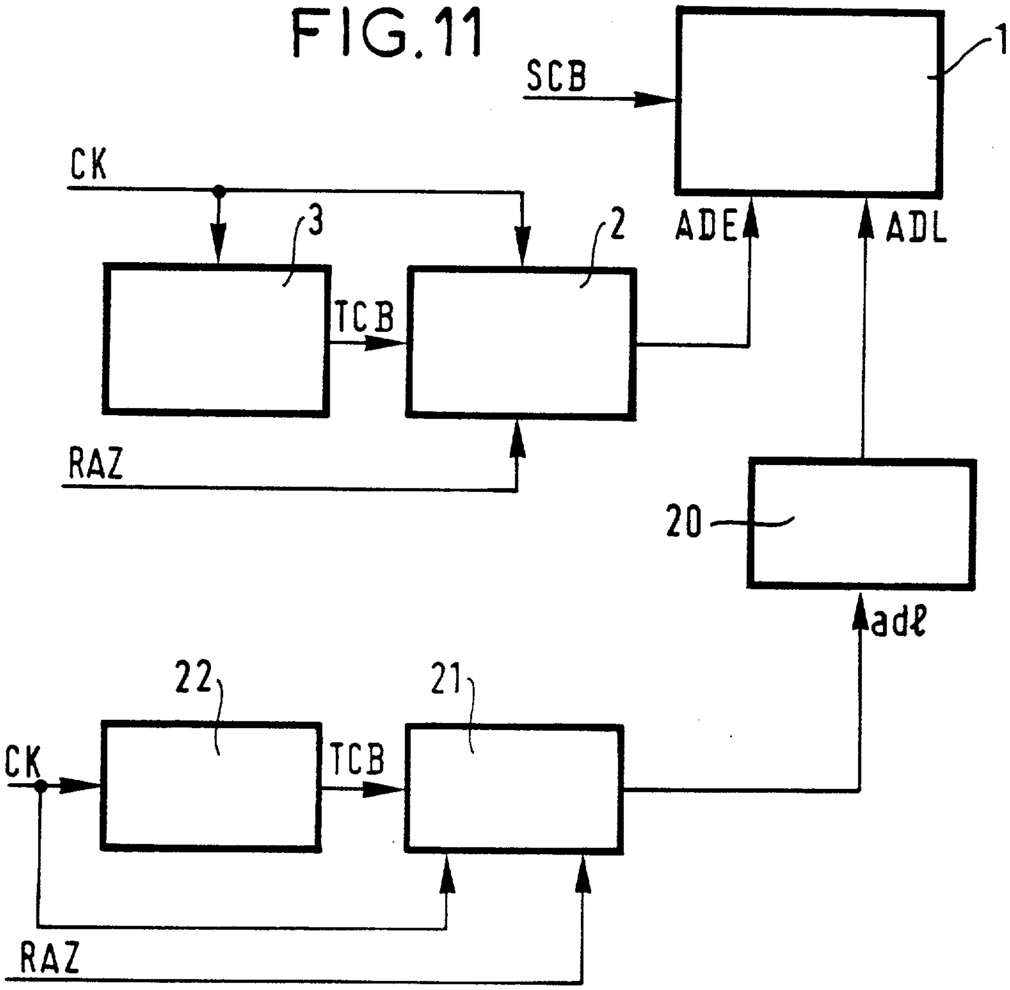

FIG.12

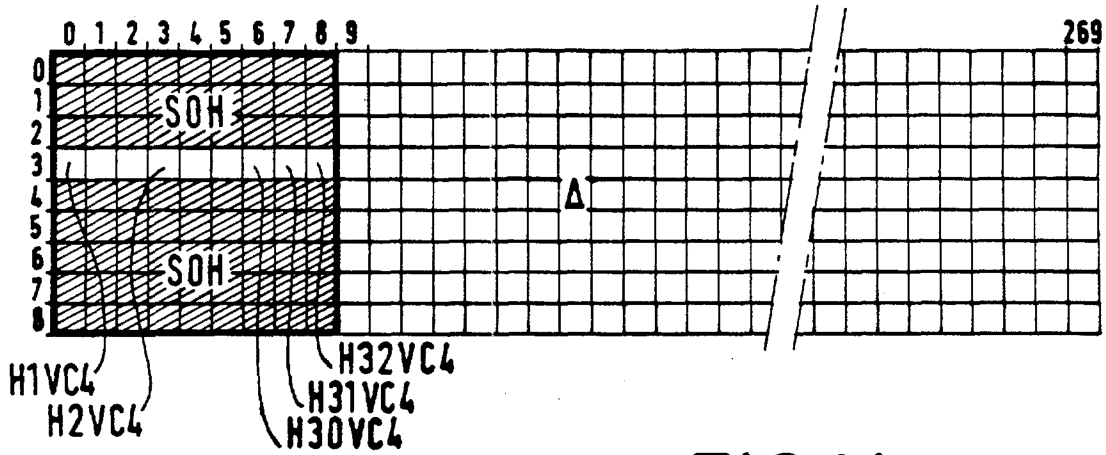


FIG.14

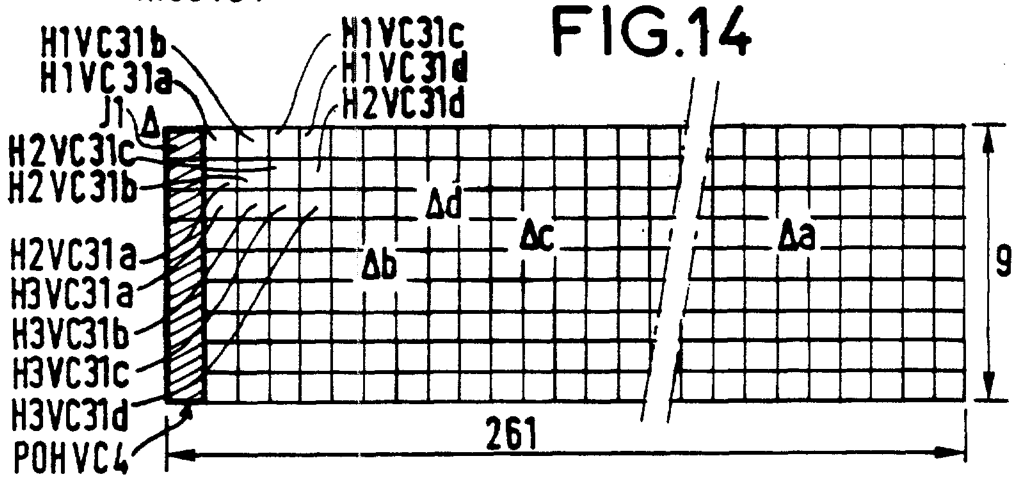


FIG.15

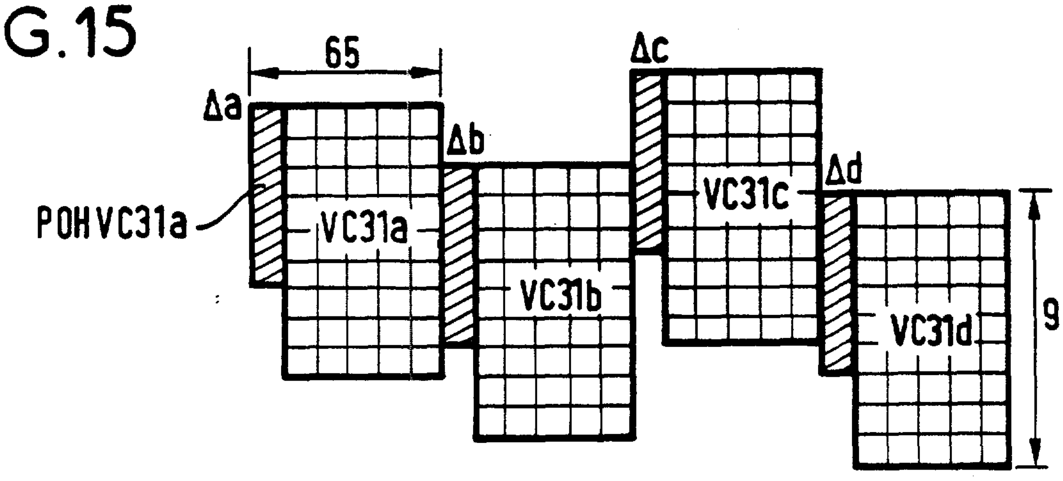

FIG.13

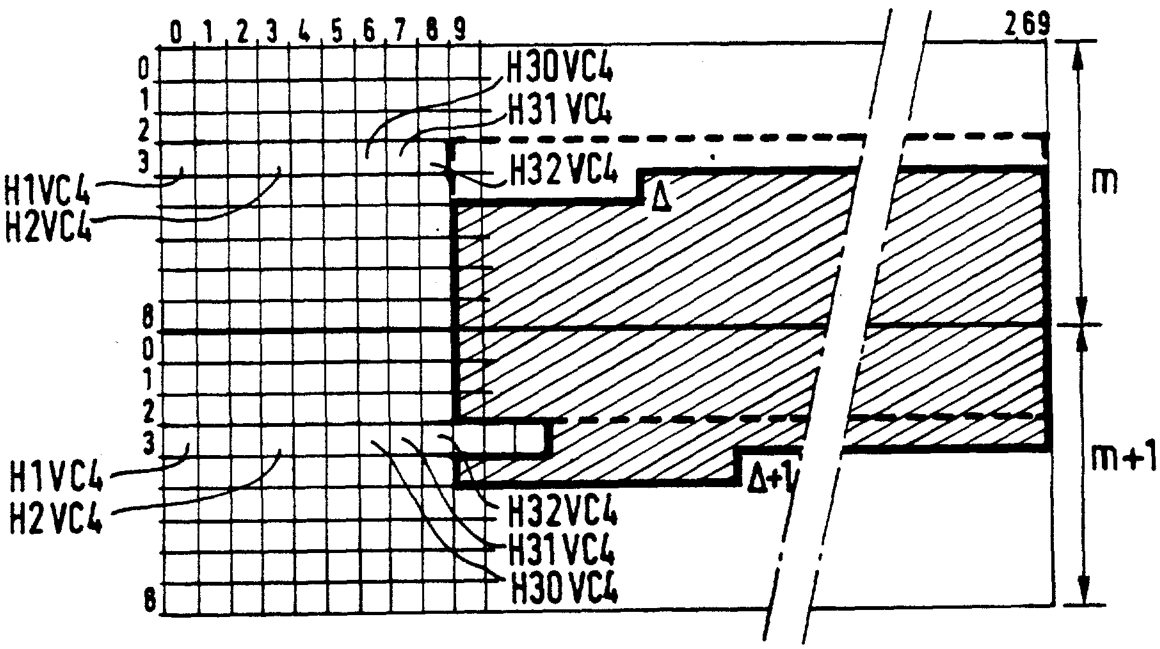
0 1 2 3 4 5 6 7 8 9
269
0
1
2
3
8
0
1
2
3
8
H30VC4
H31VC4
H32VC4
H1VC4
H2VC4
Δ
m
m+1
Δ+1
H1VC4
H2VC4
H32VC4
H31VC4
H30VC4

FIG.16

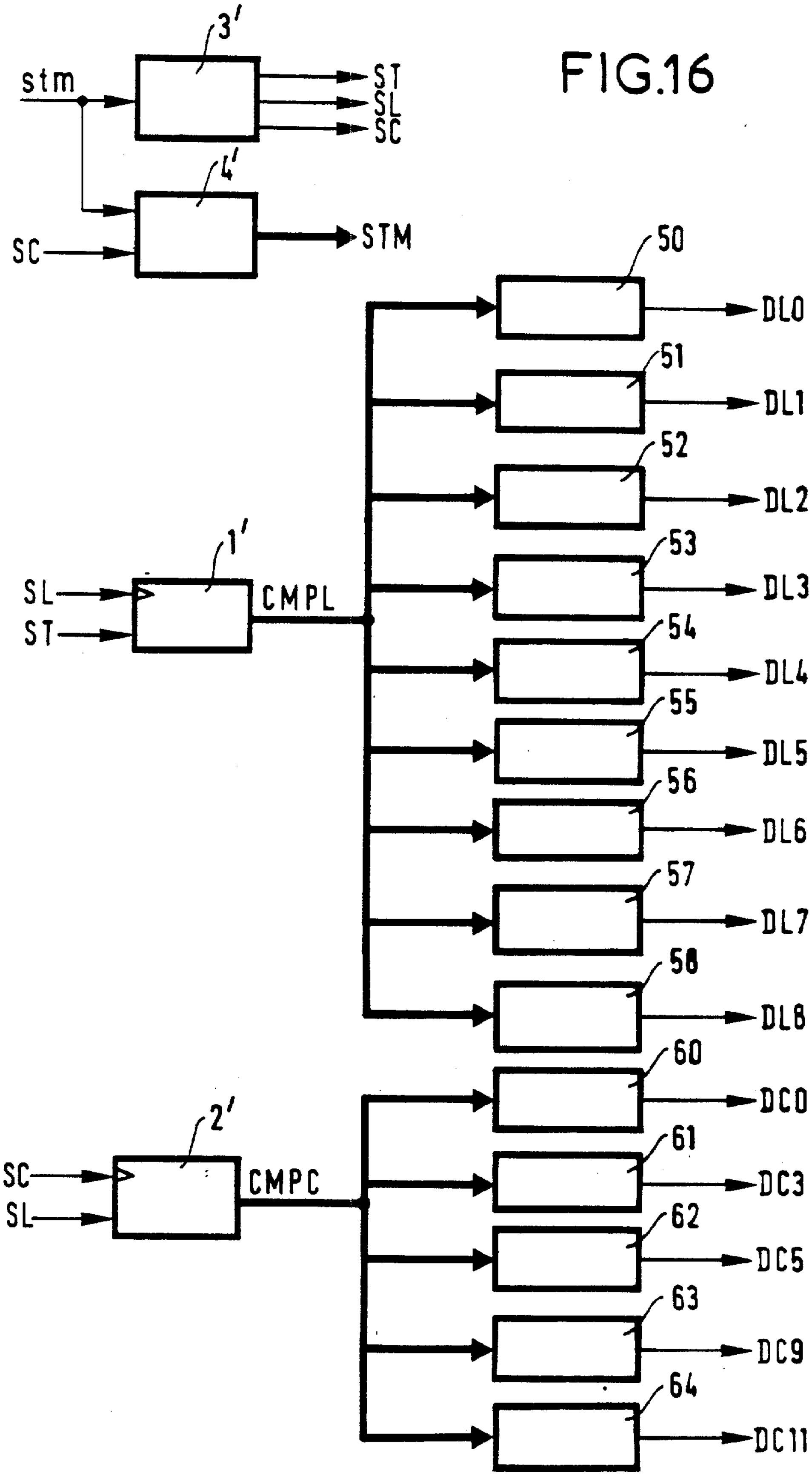
3'
stm
ST
SL
SC
4'
SC
STM
50
DL0
51
DL1
52
DL2
1'
53
SL
ST
CMPL
DL3
54
DL4
55
DL5
56
DL6
57
DL7
58
DL8
60
DC0
2'
61
SC
SL
CMPC
DC3
62
DC5
63
DC9
64
DC11

FIG.17

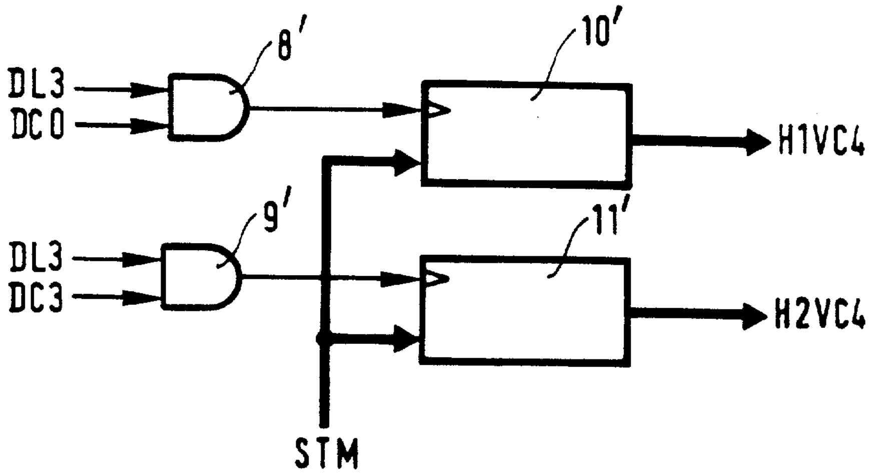
8'
10'
DL3
DC0
H1VC4
9'
11'
DL3
DC3
H2VC4
STM

FIG.18

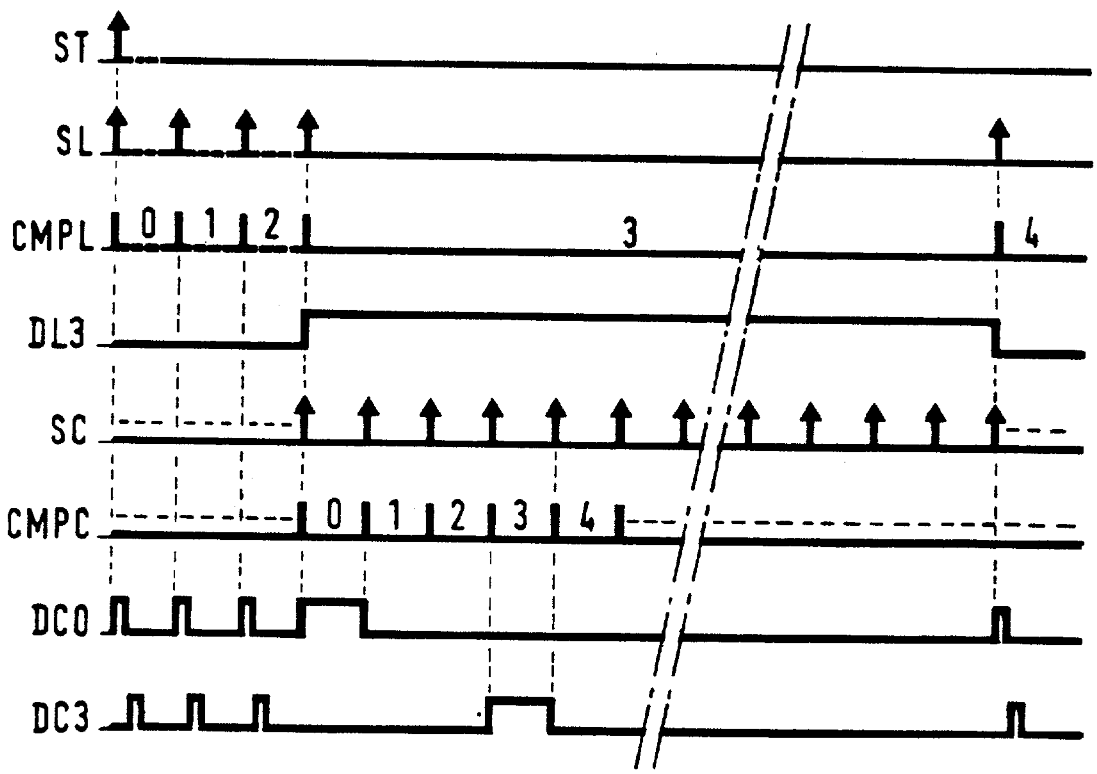
ST
SL
CMPL
0
1
2
3
4
DL3
SC
CMPC
0
1
2
3
4
DC0
DC3

FIG.19

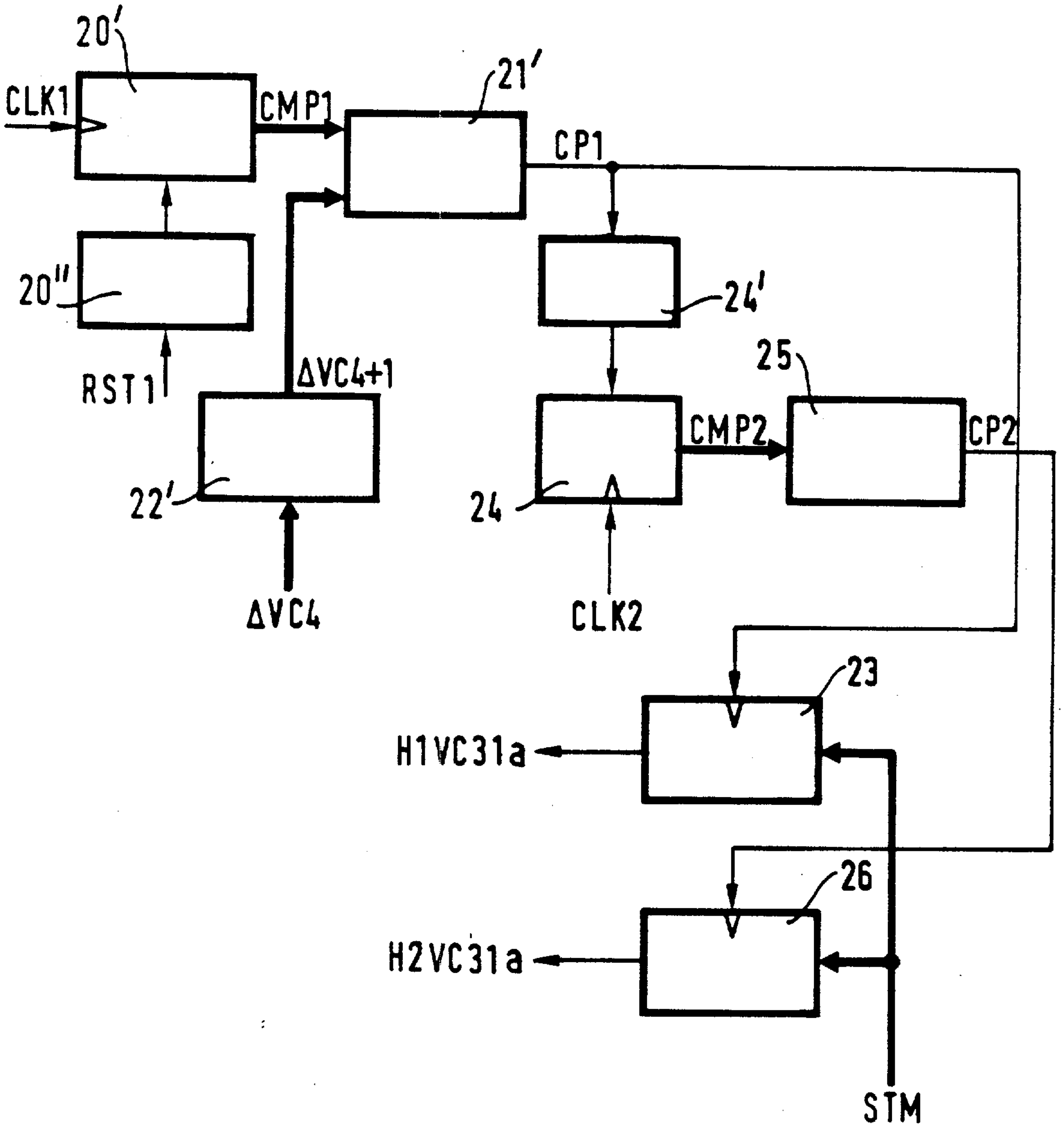
20'
CLK1
CMP1
21'
CP1
20''
24'
RST1
ΔVC4+1
25
CMP2
CP2
22'
24
ΔVC4
CLK2
23
H1VC31a
26
H2VC31a
STM

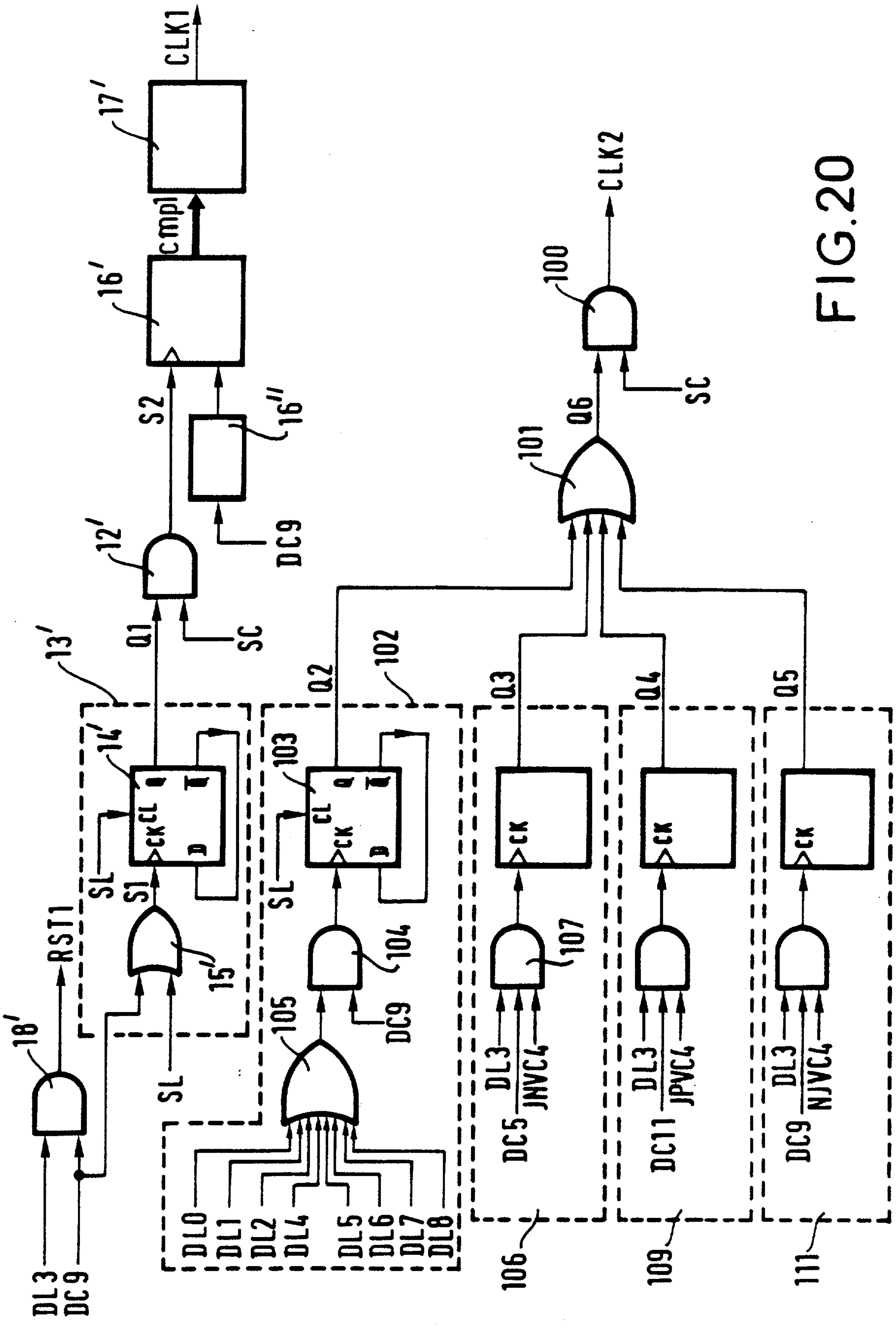
CLK1
17'
cmpl
16'
S2
16''
DC9
12'
Q1
SC
13'
14'
CL
CK
D
SL
S1
RST1
15'
18'
DL3
DC9
SL
Q2
102
103
CL
CK
D
SL
104
DC9
105
DL0
DL1
DL2
DL4
DL5
DL6
DL7
DL8
CLK2
100
SC
Q6
101
Q3
CK
107
DL3
DC5
JNVC4
106
Q4
CK
DL3
DC11
JPVC4
109
Q5
CK
DL3
DC9
NJVC4
111

FIG.20

FIG.21

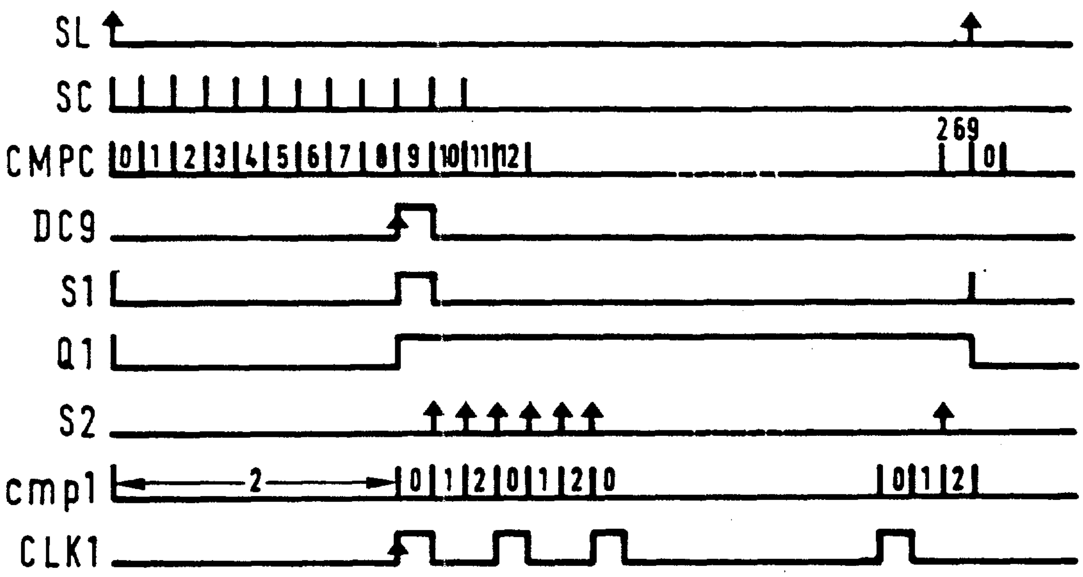
SL
SC
CMPC
0 1 2 3 4 5 6 7 8 9 10 11 12
269
0
DC9
S1
Q1
S2
cmp1
2
0 1 2 0 1 2 0
0 1 2
CLK1

FIG.22

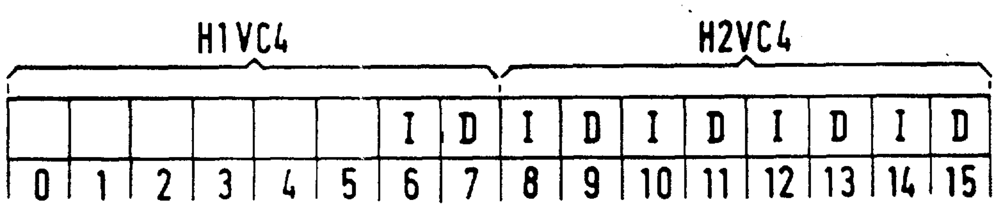
H1VC4
H2VC4
I D I D I D I D I D
0 1 2 3 4 5 6 7 8 9 10 11 12 13 14 15

FIG. 23

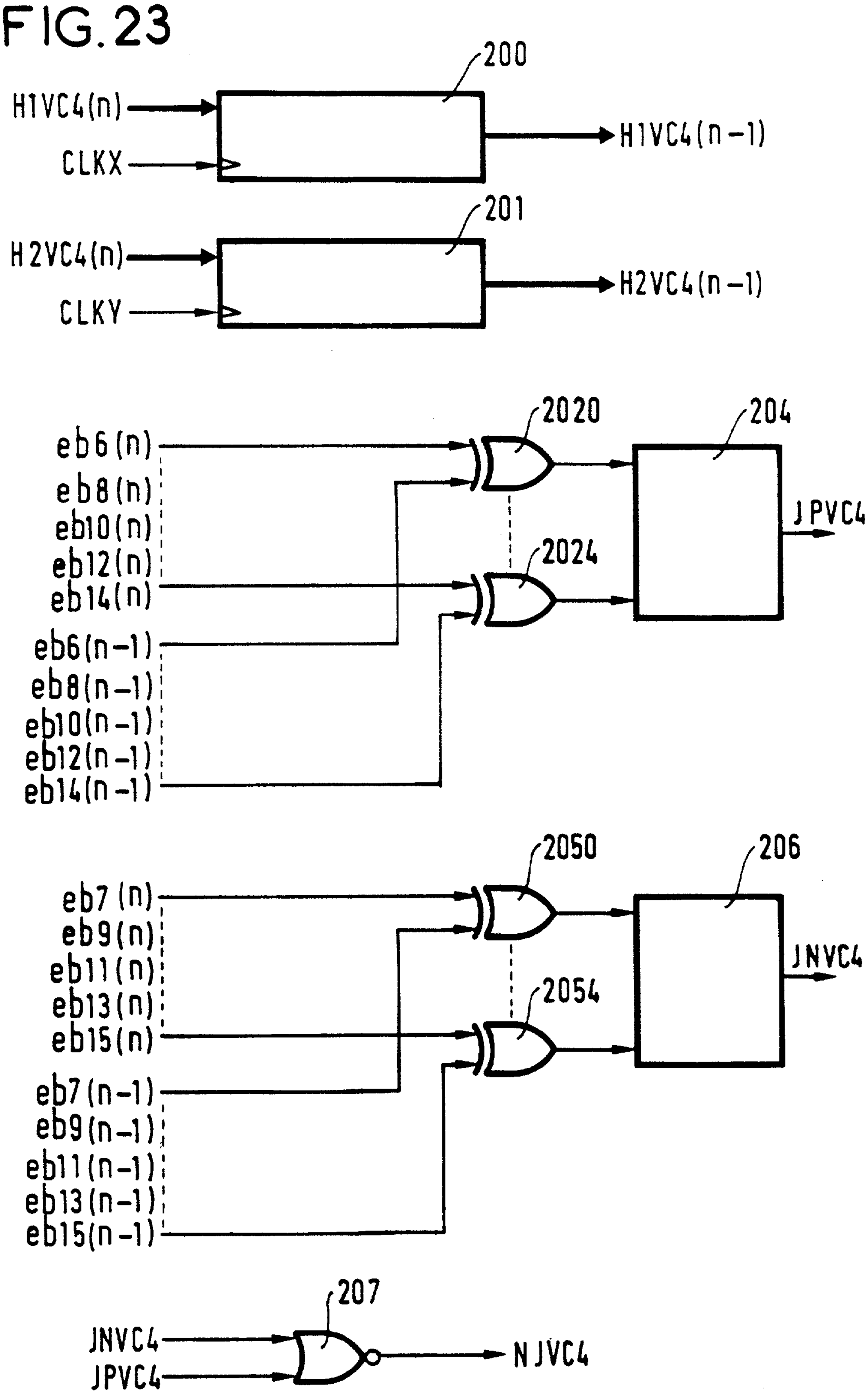
200
H1VC4(n)
CLKX
H1VC4(n-1)
201
H2VC4(n)
CLKY
H2VC4(n-1)
2020
204
eb6(n)
eb8(n)
eb10(n)
eb12(n)
eb14(n)
JPVC4
2024
eb6(n-1)
eb8(n-1)
eb10(n-1)
eb12(n-1)
eb14(n-1)
2050
206
eb7(n)
eb9(n)
eb11(n)
eb13(n)
eb15(n)
JNVC4
2054
eb7(n-1)
eb9(n-1)
eb11(n-1)
eb13(n-1)
eb15(n-1)
207
JNVC4
JPVC4
NJVC4

FIG.24

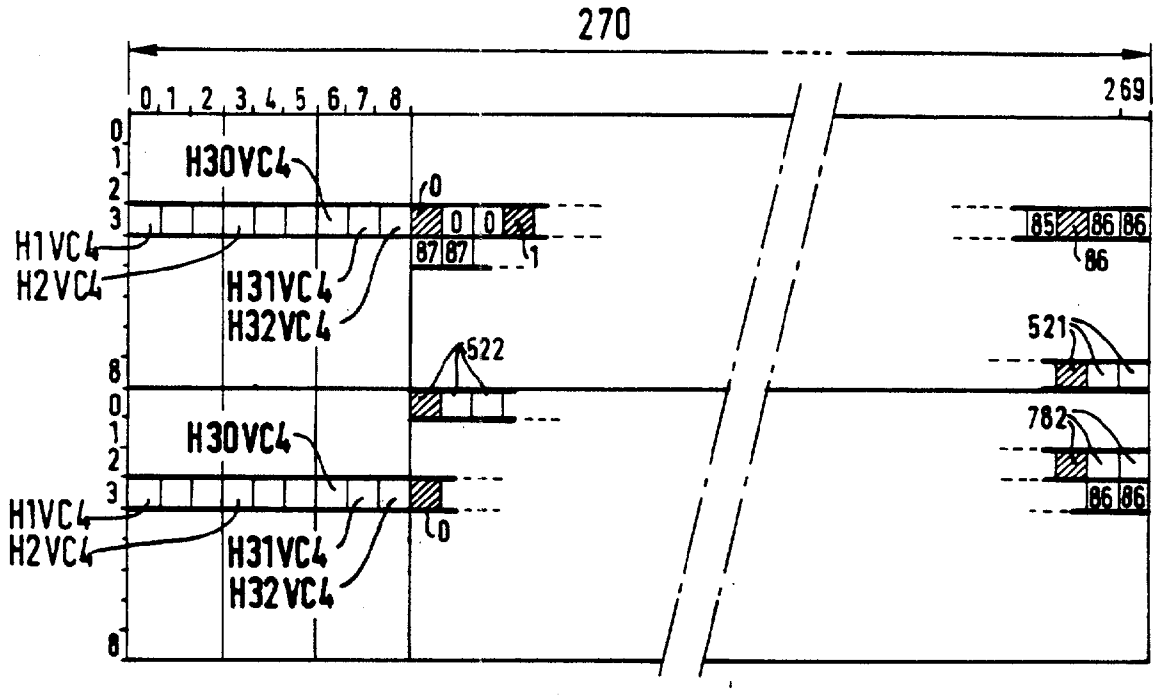
270
0 1 2 3 4 5 6 7 8
269
0
1
2
3
8
H30VC4
H1VC4
H2VC4
H31VC4
H32VC4
0
87 87
1
85 86 86
86
522
521
782
86 86

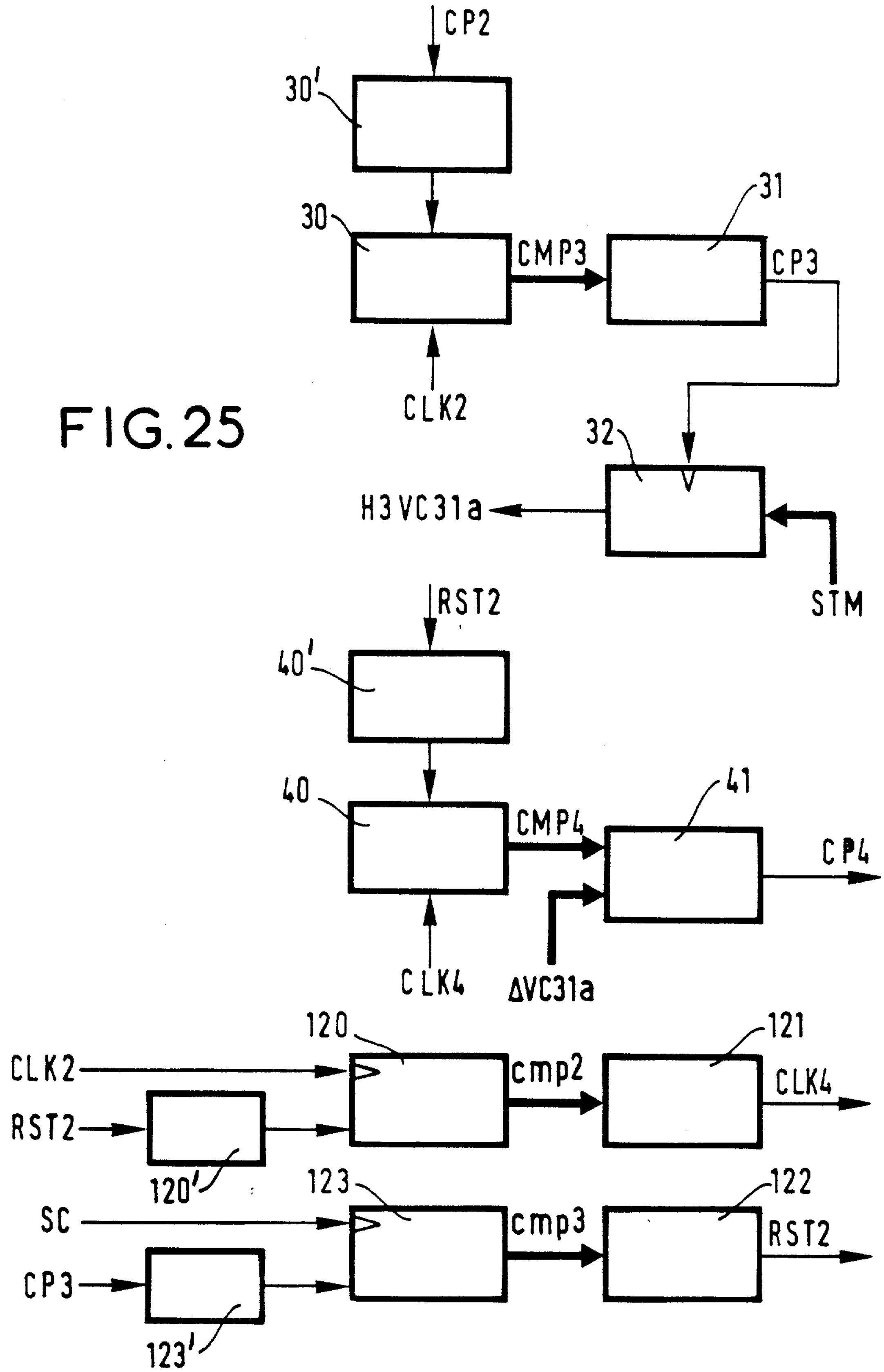
CP2
30'
30
CMP3
31
CP3
CLK2
32
H3VC31a
STM
RST2
40'
40
CMP4
41
CP4
CLK4
ΔVC31a
120
121
CLK2
cmp2
CLK4
RST2
120'
123
122
SC
cmp3
RST2
CP3
123'

FIG. 25

FIG.26

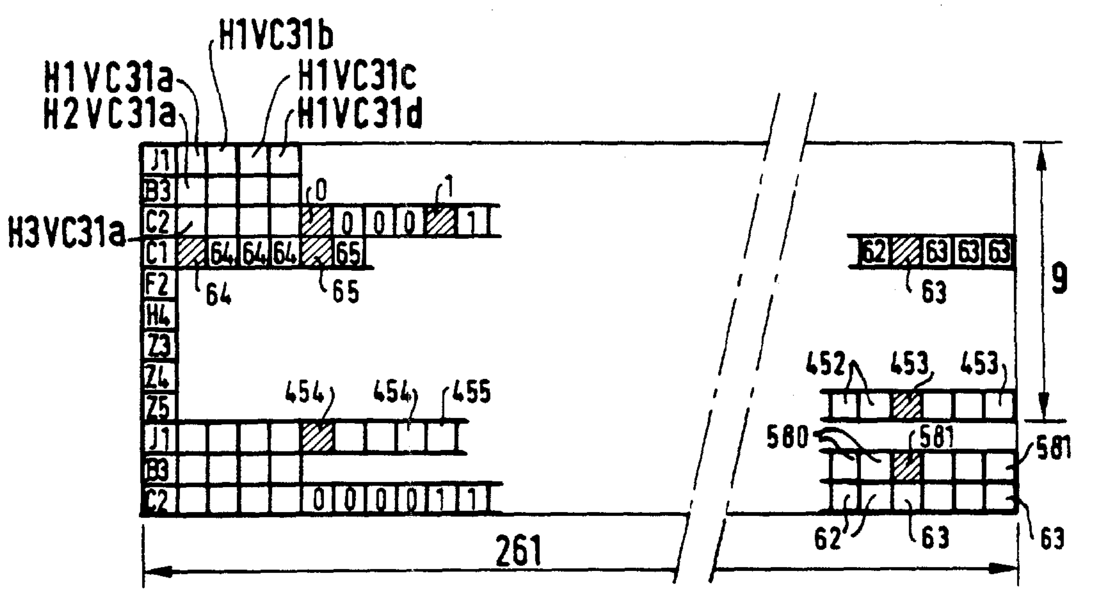
H1VC31b
H1VC31a
H2VC31a
H1VC31c
H1VC31d
H3VC31a
J1
B3
C2
C1
F2
H4
Z3
Z4
Z5
J1
B3
C2
0
1
0 0 0
1
64 64 64
65
64
65
62
63 63 63
63
9
452
453
453
454
454
455
580
581
581
0 0 0 0 1 1
62
63
63
261

FIG.27

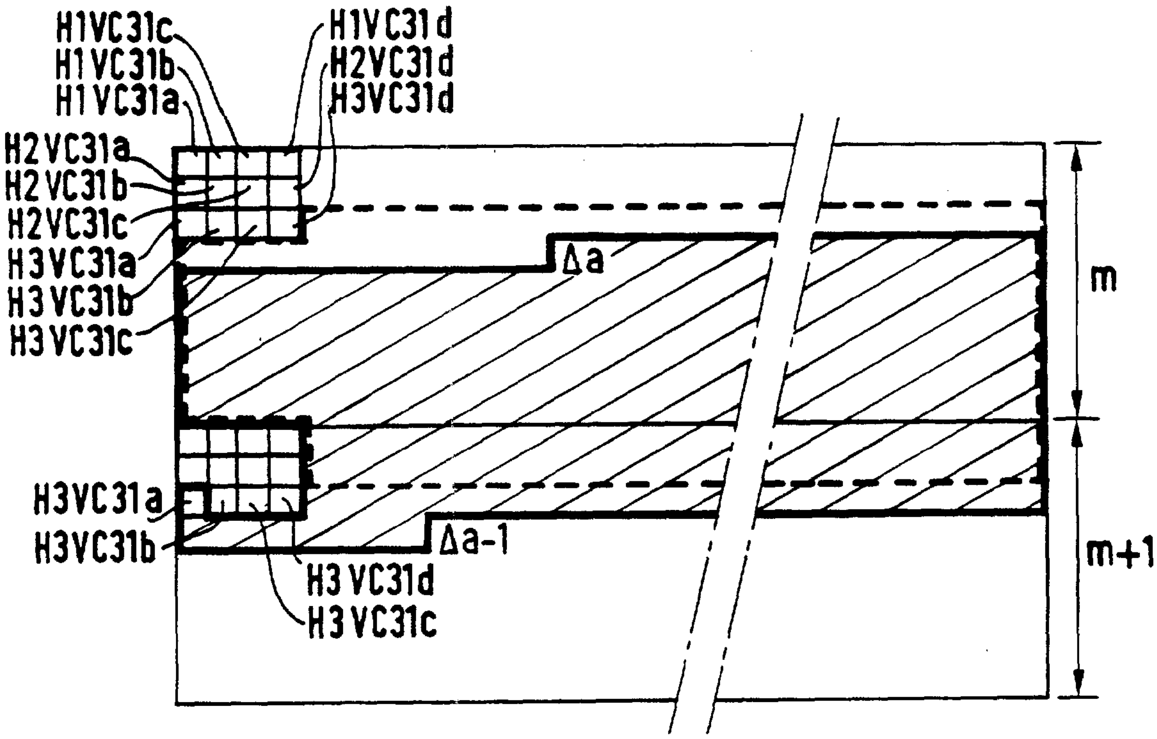
H1VC31c
H1VC31b
H1VC31a
H2VC31a
H2VC31b
H2VC31c
H3VC31a
H3VC31b
H3VC31c
H1VC31d
H2VC31d
H3VC31d
Δa
m
m+1
H3VC31a
H3VC31b
Δa-1
H3VC31d
H3VC31c

FIG.28

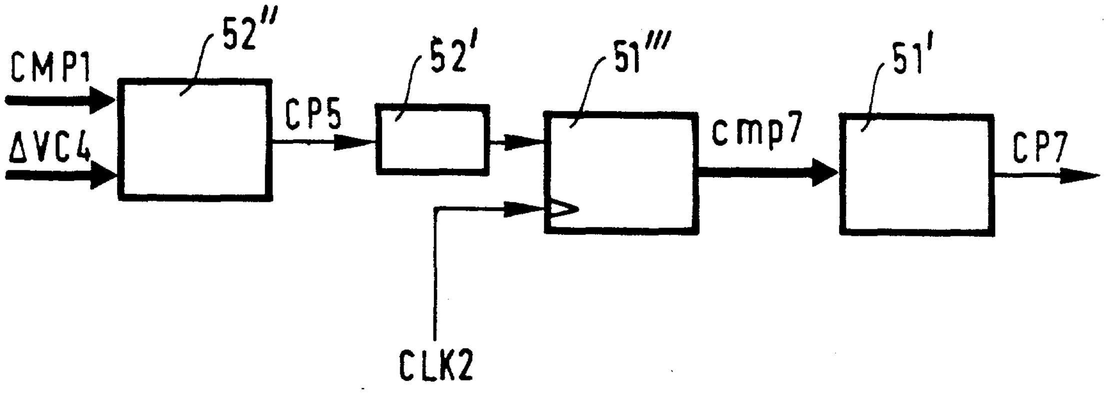
52''
CMP1
ΔVC4
CP5
52'
51''''
cmp7
51'
CP7
CLK2

FIG.29

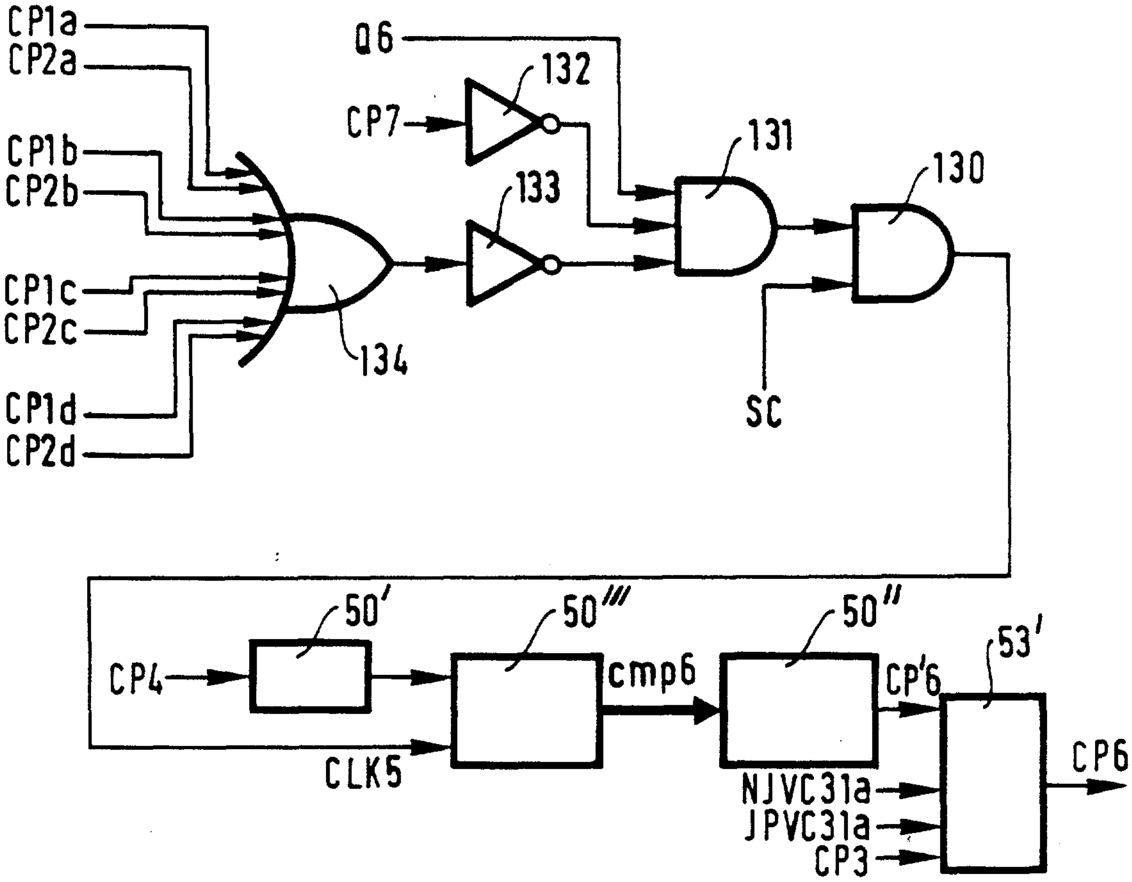
CP1a
CP2a
CP1b
CP2b
CP1c
CP2c
CP1d
CP2d
134
Q6
CP7
132
133
131
130
SC
50'
50''''
50''
53'
CP4
cmp6
CP'6
CLK5
NJVC31a
JPVC31a
CP3
CP6

FIG.30

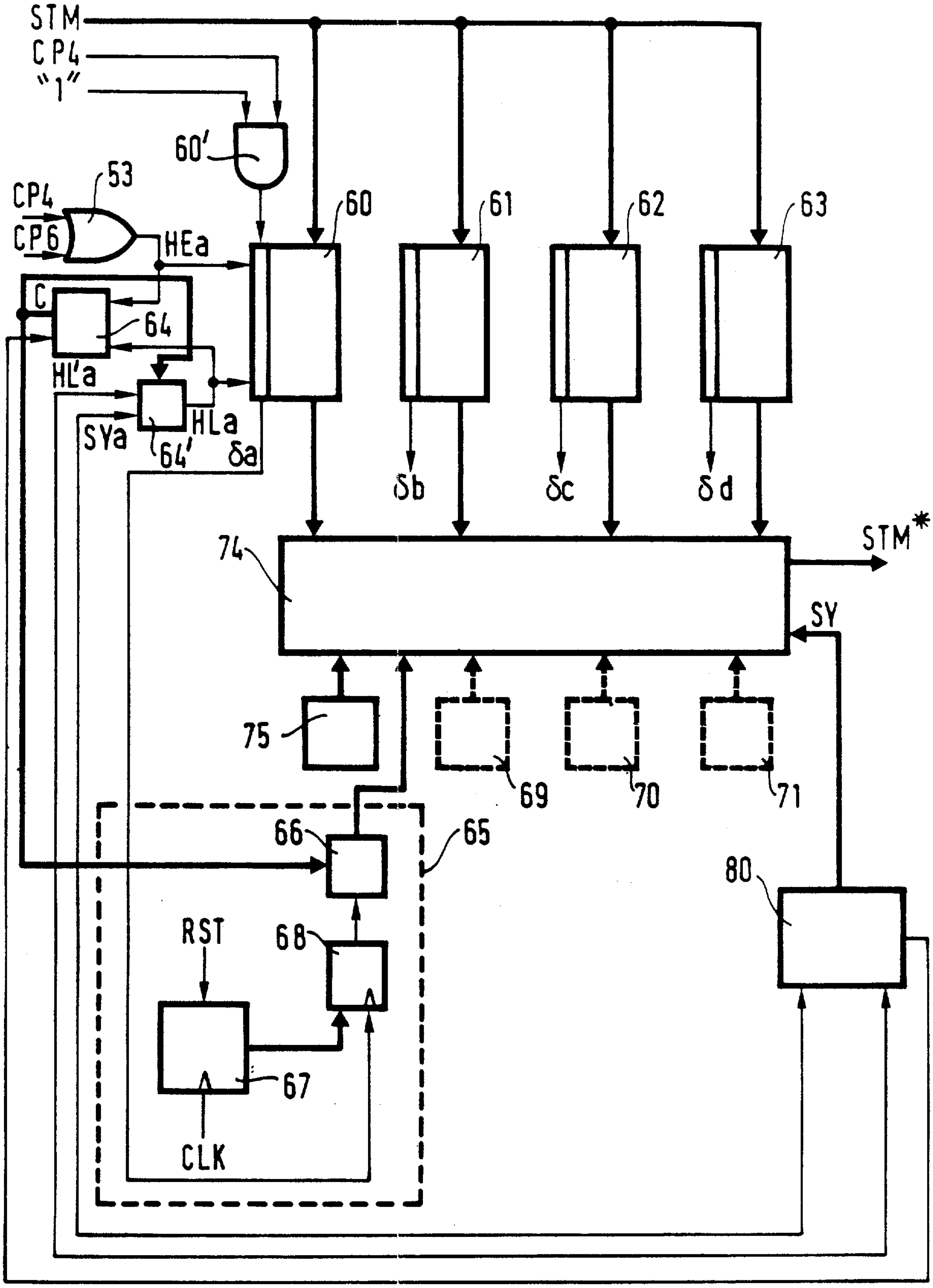
STM
CP4
"1"
60'
53
CP4
CP6
HEa
60
61
62
63
C
64
HL'a
HLa
SYa
64'
δa
δb
δc
δd
74
STM*
SY
75
69
70
71
65
66
80
RST
68
67
CLK

FIG.31

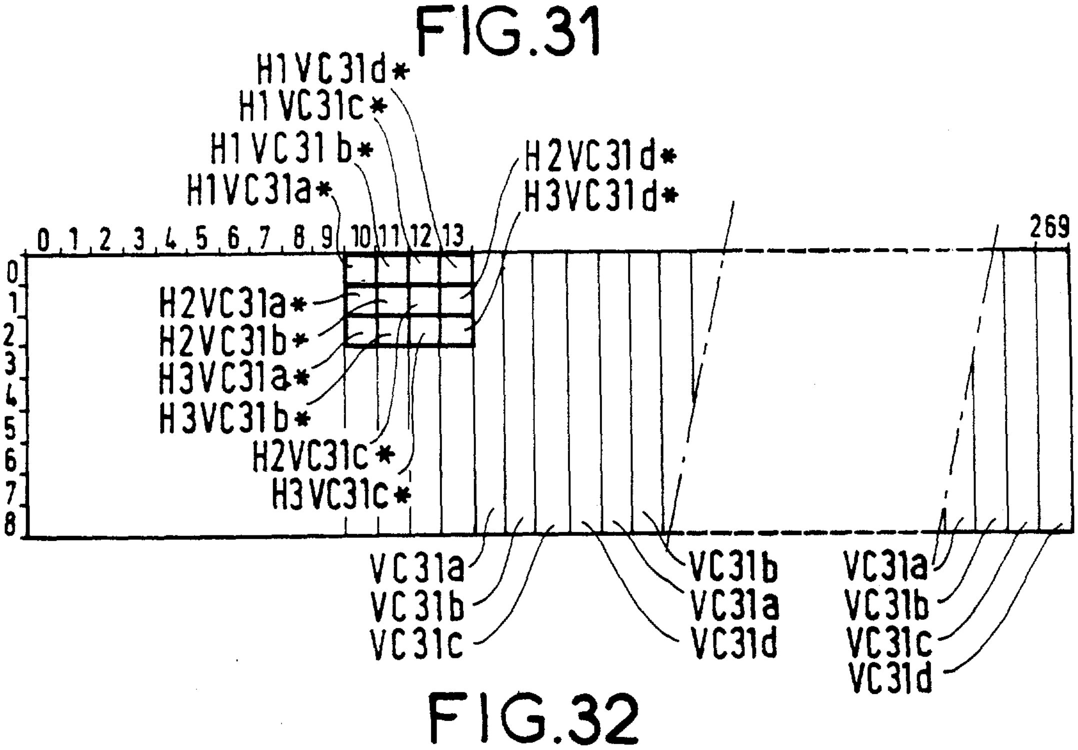


FIG.32

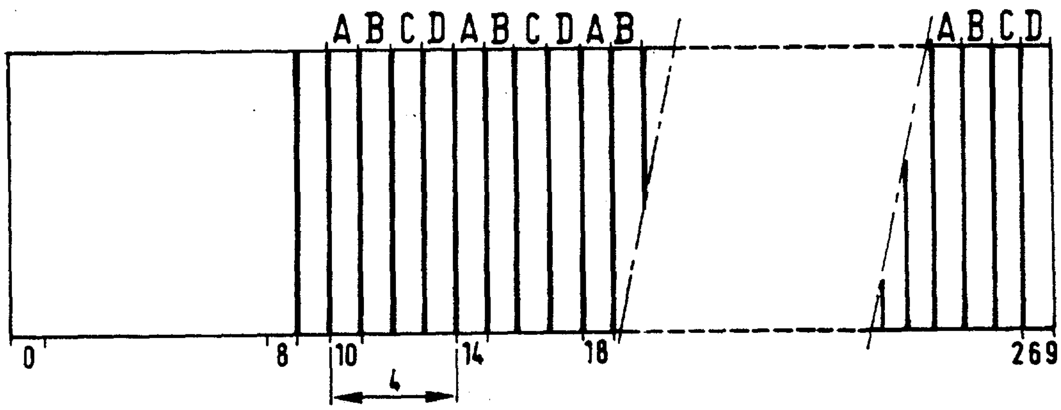


FIG.33